# EUROPÄISCHE PATENTSCHRIFT

(11) **EP 2 835 507 B1**
(45) Veröffentlichungstag und Bekanntmachung des Hinweises auf die Patenterteilung: **21.09.2016**
(21) Anmeldenummer: 13003986.0
(22) Anmeldetag: 09.08.2013
(51) Int. Cl.: F01K 3/00, F02C 6/16, F25J 1/02, F01K 13/02

(54) **Verfahren zur Erzeugung von elektrischer Energie und Energieerzeugungsanlage**
Method for generating electrical energy and energy generation system
Procédé pour la production d'énergie électrique et installation de production d'énergie

(43) Veröffentlichungstag der Anmeldung: 11.02.2015
(73) Patentinhaber: Linde Aktiengesellschaft, 80331 München (DE); Hitachi Power Europe GmbH, 47059 Duisburg (DE)
(72) Erfinder: Alekseev, Alexander Dr., 82515 Wolfratshausen (DE); Stiller, Christoph Dr., 82256 Fürstenfeldbruck (DE); Rehfeldt, Sebastian, 45145 Essen (DE); Stöver, Brian Dr., 45665 Recklinghausen (DE)
(74) Vertreter: Imhof, Dietmar

(56) Entgegenhaltungen:
- EP-A1- 2 604 824
- GB-A- 2 494 400
- JP-A- H04 132 837
- US-A1- 2003 101 728
- US-A1- 2009 282 840

## Beschreibung

Die Erfindung betrifft ein Verfahren zur Erzeugung von elektrischer Energie in einer kombinierten Energieerzeugungsanlage, die eine Luftbehandlungseinheit und eine Kraftwerkseinheit umfasst, und eine entsprechende Energieerzeugungsanlage gemäß den Oberbegriffen der unabhängigen Patentansprüche.

### Stand der Technik

Beispielsweise aus US 2003101728 A1, DE 31 39 567 A1 und EP 1 989 400 A1 ist bekannt, Flüssigluft oder Flüssigstickstoff, also tiefkalte Luftverflüssigungsprodukte, zur Netzregelung und zur Bereitstellung von Regelleistung in Stromnetzen zu verwenden.

Zu Billigstromzeiten oder Stromüberschusszeiten wird dabei Luft in einer Luftzerlegungsanlage mit einem integrierten Verflüssiger oder in einer dezidierten Verflüssigungsanlage, hier allgemein als Luftbehandlungseinheit bezeichnet, insgesamt oder teilweise zu einem derartigen Luftverflüssigungsprodukt verflüssigt. Das Luftverflüssigungsprodukt wird in einem Tanksystem mit Tieftemperaturtanks gespeichert. Dieser Betriebsmodus wird hier als "Verflüssigungsbetrieb" bezeichnet.

Zu Spitzenlastzeiten wird das Luftverflüssigungsprodukt aus dem Tanksystem entnommen, mittels einer Pumpe druckerhöht und bis auf etwa Umgebungstemperatur oder höher angewärmt und damit in einen gasförmigen oder überkritischen Zustand überführt. Ein hierdurch erhaltener Hochdruckstrom wird in einer Kraftwerkseinheit in einer Entspannungsturbine oder mehreren Entspannungsturbinen mit Zwischenerwärmung bis auf Umgebungsdruck entspannt. Die dabei freiwerdende mechanische Leistung wird in einem oder mehreren Generatoren der Kraftwerkseinheit in elektrische Energie umgewandelt und in ein elektrisches Netz eingespeist. Dieser Betriebsmodus wird hier als "Entnahmebetrieb" bezeichnet.

Entsprechende Verfahren und Vorrichtungen können, wie auch das Verfahren und die Vorrichtung der Erfindung, grundsätzlich auch mit einem Luftverflüssigungsprodukt arbeiten, welches mehr als 40 Molprozent Sauerstoff enthält. Dies wurde hier jedoch ausgenommen, um eine Verwechslung mit Verfahren und Vorrichtungen zu vermeiden, bei denen ein besonders sauerstoffreiches Fluid zur Unterstützung von Oxidationsreaktionen in eine Gasturbine eingeleitet wird.

Die beim Überführen des Luftverflüssigungsprodukts in den gasförmigen oder überkritischen Zustand freiwerdende Kälte kann während des Entnahmebetriebs auch gespeichert und während des Verflüssigungsbetriebs zur Bereitstellung von Kälte zur Gewinnung des Luftverflüssigungsprodukts eingesetzt werden.

Es sind schließlich auch Druckluftspeicherkraftwerke bekannt, in denen die Einsatzluft jedoch nicht verflüssigt, sondern in einem Verdichter verdichtet und in einer unterirdischen Kaverne gespeichert wird. In Zeiten hoher Stromnachfrage wird die Druckluft aus der Kaverne in die Brennkammer einer Gasturbine geleitet. Gleichzeitig wird der Gasturbine über eine Gasleitung Brennstoff, beispielsweise Erdgas, zugeführt und in der durch die Druckluft gebildeten Atmosphäre verbrannt. Das gebildete Abgas wird in der Gasturbine entspannt, wodurch Energie erzeugt wird.

Die Wirtschaftlichkeit entsprechender Verfahren und Vorrichtungen wird stark vom Gesamtwirkungsgrad beeinflusst. Der Erfindung liegt die Aufgabe zugrunde, entsprechende Verfahren und Vorrichtungen in ihrer Wirtschaftlichkeit zu verbessern.

### Offenbarung der Erfindung

Die Erfindung schlägt vor diesem Hintergrund ein Verfahren zur Erzeugung von elektrischer Energie in einer kombinierten Energieerzeugungsanlage, die eine Luftbehandlungseinheit und eine Kraftwerkseinheit umfasst, sowie eine entsprechende Energieerzeugungsanlage gemäß den Merkmalen der unabhängigen Patentansprüche vor. Bevorzugte Ausführungsformen sind Gegenstand der Unteransprüche sowie der nachfolgenden Beschreibung.

Vor der Erläuterung der im Rahmen der vorliegenden Erfindung erzielbaren Vorteile werden einige in dieser Anmeldung verwendete Begriffe erläutert.

Unter einer "Kraftwerkseinheit" wird hier eine Anlage oder ein Anlagenteil verstanden, die bzw. der zur Erzeugung von elektrischer Energie eingerichtet ist. Eine

Kraftwerkseinheit umfasst dabei zumindest eine Entspannungsturbine, die mit zumindest einem Generator gekoppelt ist. Die bei der Entspannung eines Fluids in der zumindest einen Entspannungsturbine frei werdende mechanische Leistung kann in der Kraftwerkseinheit in elektrische Energie umgesetzt werden.

Unter einer "Luftbehandlungseinheit" wird hier eine Anlage verstanden, die zur Gewinnung wenigstens eines "Luftverflüssigungsprodukts" aus Luft eingerichtet ist. Es kann sich hierbei, wie eingangs erläutert, um eine Luftzerlegungsanlage handeln, die zur Gewinnung entsprechender Luftfraktionen eingerichtet sein kann, oder auch nur um eine Verflüssigungseinheit einer derartigen Anlage oder eine dezidierte Verflüssigungseinheit. Ausreichend für eine Luftbehandlungseinheit zum Einsatz in der vorliegenden Erfindung ist es, dass durch diese ein entsprechendes tiefkaltes Luftverflüssigungsprodukt erhalten werden kann, das als Speicherflüssigkeit verwendbar und in ein Tanksystem überführbar ist. Eine "Luftzerlegungsanlage" wird mit atmosphärischer Luft beschickt und weist ein Destillationssäulensystem zur Zerlegung der atmosphärischen Luft in ihre physikalischen Komponenten auf, insbesondere in Stickstoff und Sauerstoff. Hierzu wird die Luft zunächst in die Nähe ihres Taupunkts abgekühlt und dann in das Destillationssäulensystem eingeleitet. Verfahren und Vorrichtungen zur Tieftemperaturzerlegung von Luft sind z.B. aus Hausen/Linde, Tieftemperaturtechnik, 2. Auflage 1985, Kapitel 4 (Seiten 281 bis 337) bekannt. Im Gegensatz hierzu umfasst eine "Luftverflüssigungsanlage" kein Destillationssäulensystem. Im Übrigen entspricht ihr Aufbau dem einer Luftzerlegungsanlage mit der Abgabe eines Luftverflüssigungsprodukts. Selbstverständlich kann auch in einer Luftzerlegungsanlage Flüssigluft als Nebenprodukt erzeugt werden.

Ein "Luftverflüssigungsprodukt" ist jedes Produkt, das zumindest durch Verdichten, Abkühlen und anschließendes Entspannen von Luft in Form einer tiefkalten Flüssigkeit hergestellt werden kann. Insbesondere kann es sich bei einem Luftverflüssigungsprodukt um Flüssigluft, flüssigen Sauerstoff, flüssigen Stickstoff und/oder ein flüssiges Edelgas wie flüssiges Argon handeln. Die Begriffe "flüssiger Sauerstoff" bzw. "flüssiger Stickstoff' bezeichnen dabei jeweils auch eine tiefkalte Flüssigkeit, die Sauerstoff bzw. Stickstoff in einer Menge aufweist, die oberhalb derer atmosphärischer Luft liegt. Es muss sich dabei also nicht notwendigerweise um reine Flüssigkeiten mit hohen Gehalten von Sauerstoff bzw. Stickstoff handeln. Unter flüssigem Stickstoff wird also sowohl reiner oder im Wesentlichen reiner Stickstoff verstanden, als auch ein Gemisch aus verflüssigten Luftgasen, dessen Stickstoffgehalt höher als derjenige der atmosphärischen Luft ist. Beispielsweise weist dieses einen Stickstoffgehalt von mindestens 90, vorzugsweise mindestens 99 Molprozent auf.

Unter einer "tiefkalten" Flüssigkeit, bzw. einem entsprechenden Fluid, Luftverflüssigungsprodukt, Strom usw. wird ein flüssiges Medium verstanden, dessen Siedepunkt deutlich unterhalb der jeweiligen Umgebungstemperatur liegt und beispielsweise 200 K oder weniger, insbesondere 220 K oder weniger, beträgt. Beispiele sind flüssige Luft, flüssiger Sauerstoff, flüssiger Stickstoff usw.

Ein "Wärmetauschersystem" dient zur indirekten Übertragung von Wärme zwischen zumindest zwei im Gegenstrom zueinander geführten Strömen, beispielsweise einem warmen Druckluftstrom und einem oder mehreren kalten Strömen oder einem tiefkalten Luftverflüssigungsprodukt und einem oder mehreren warmen Strömen. Ein Wärmetauschersystem kann aus einem einzelnen oder mehreren parallel und/oder seriell verbundenen Wärmetauscherabschnitten gebildet sein, z.B. aus einem oder mehreren Plattenwärmetauscherblöcken.

Ein "Verdichtersystem" ist eine Vorrichtung, die zum Verdichten wenigstens eines gasförmigen Stroms von wenigstens einem Eingangsdruck, bei dem dieser dem Verdichtersystem zugeführt wird, auf wenigstens einen Enddruck, bei dem dieser dem Verdichtersystem entnommen wird, eingerichtet ist. Das Verdichtersystem bildet dabei eine bauliche Einheit, die jedoch mehrere "Verdichterstufen" in Form bekannter Kolben-, Schrauben- und/oder Schaufelrad- bzw. Turbinenanordnungen (also Radial-oder Axialverdichterstufen) aufweisen kann. Insbesondere werden diese Verdichterstufen mittels eines gemeinsamen Antriebs, beispielsweise über eine gemeinsame Welle bzw. einen gemeinsamen Elektromotor, angetrieben. Mehrere Verdichtersysteme, z.B. ein Haupt- und ein Nachverdichter einer Luftbehandlungseinheit, können zusammen eine "Verdichteranordnung" bilden.

Eine "Entspannungsturbine", die über eine gemeinsame Welle mit weiteren Entspannungsturbinen oder Energiewandlern wie Ölbremsen, Generatoren oder Verdichterstufen gekoppelt sein kann, ist zur Entspannung eines gasförmigen oder zumindest teilweise flüssigen Stroms eingerichtet. Insbesondere können Entspannungsturbinen zum Einsatz in der vorliegenden Erfindung als Turboexpander ausgebildet sein. In der Kraftwerkstechnik werden Entspannungsmaschinen bzw. Entspannungsturbinen oft als Expander bezeichnet. Sind eine oder mehrere als Turboexpander ausgebildete Entspannungsturbinen nur mit einer oder mehreren Verdichterstufen, beispielsweise in Form von Radialverdichterstufen, gekoppelt und ggf. mechanisch gebremst, werden diese jedoch ohne extern, beispielsweise mittels eines Elektromotors, zugeführte Energie betrieben, wird hierfür der Begriff "Boosterturbine" verwendet. Eine derartige Boosterturbine verdichtet dabei zumindest einen Strom durch die Entspannung zumindest eines anderen Stroms, jedoch ohne extern, beispielsweise mittels eines Elektromotors, zugeführte Energie.

Unter einer "Gasturbine" wird im Rahmen der vorliegenden Anmeldung eine Anordnung aus wenigstens einer Brennkammer und wenigsten einer dieser nachgeschalteten Entspannungsturbine (der Gasturbine im engeren Sinn) verstanden. In letzterer werden heiße Gase aus der Brennkammer arbeitsleistend entspannt. Eine Gasturbine kann ferner wenigstens eine von der Entspannungsturbine über eine gemeinsame Welle angetriebene Verdichterstufe, typischerweise wenigstens eine Axialverdichterstufe, aufweisen. Ein Teil der in der Entspannungsturbine erzeugten mechanischen Energie wird üblicherweise zum Antrieb der wenigstens einen Verdichterstufe eingesetzt. Ein weiterer Teil wird regelmäßig zur Erzeugung elektrischer Energie in einem Generator umgesetzt.

Als Abwandlung einer Gasturbine weist eine "Verbrennungsturbine" lediglich die erwähnte Brennkammer und eine dieser nachgeschaltete Entspannungsturbine auf. Ein Verdichter ist üblicherweise nicht vorgesehen.

Eine "Heißgasturbine" weist im Gegensatz zu einer Gasturbine statt einer Brennkammer einen Erhitzer auf. Eine Heißgasturbine kann einstufig mit einem Erhitzer und einer Entspannungsturbine ausgebildet sein. Alternativ können jedoch mehrere Entspannungsturbinen, vorzugsweise mit Zwischenerhitzung, vorgesehen sein. In jedem Fall kann insbesondere stromab der letzten Entspannungsturbine ein weiterer Erhitzer vorgesehen sein. Auch die Heißgasturbine ist vorzugsweise mit einem oder mehreren Generatoren zur Erzeugung von elektrischer Energie gekoppelt.

Unter einem "Erhitzer" wird im Rahmen dieser Anmeldung ein System zum indirekten Wärmetausch zwischen einem Heizfluid und einem zu erhitzenden gasförmigen Fluid verstanden. Mittels eines derartigen Erhitzers kann Restwärme, Abwärme, Prozesswärme, Solarwärme etc. auf das zu erhitzende gasförmige Fluid übertragen und zur Energieerzeugung in einer Heißgasturbine genutzt werden.

Ein "Abwärmedampferzeuger", auch als Abhitzekessel (engl. Heat Recovery Steam Generator, HRSG) bezeichnet, ist zur Erzeugung von Dampf durch Erhitzen von Wasser oder zum weiteren Erhitzen, z.B. von Kaltdampf zu Heißdampf, mittels eines Abwärmestroms, beispielsweise mittels eines noch heißen oder nacherhitzten Gasstroms stromab einer Gasturbine oder Heißgasturbine eingerichtet.

Unter einem "Tanksystem" wird im Rahmen der vorliegenden Anmeldung eine Anordnung mit wenigstens einem zur Speicherung eines tiefkalten Luftverflüssigungsprodukts eingerichteten Tieftemperaturspeichertank verstanden. Ein entsprechendes Tanksystem weist Isolationsmittel auf.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10%, 20% oder sogar 50% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche Druckverluste oder zu erwartende Druckverluste, beispielsweise aufgrund von Abkühlungseffekten, ein. Entsprechendes gilt für Temperaturniveaus. Bei den hier in bar angegebenen Druckniveaus handelt es sich um Absolutdrücke.

Werden tiefkalte Luftverflüssigungsprodukte bzw. entsprechende flüssige Ströme im Rahmen der vorliegenden Anmeldung durch Erwärmen "in einen gasförmigen oder überkritischen Zustand überführt", schließt dies einerseits einen regulären Phasenübergang durch Verdampfen ein, wenn dies bei unterkritischem Druck erfolgt. Falls solche tiefkalte Luftverflüssigungsprodukte bzw. entsprechende flüssige Ströme jedoch bei einem Druck erwärmt werden, der oberhalb des kritischen Drucks liegt, erfolgt beim Erwärmen über die kritische Temperatur hinaus kein Phasenübergang im eigentlichen Sinn, sondern ein Übergang vom flüssigen in den überkritischen Zustand, wofür hier der Begriff "Pseudoverdampfen" verwendet wird.

### Vorteile der Erfindung

Im Rahmen der vorliegenden Erfindung wird ein Verfahren zur Gewinnung von elektrischer Energie in einer kombinierten Energieerzeugungsanlage, die eine Luftbehandlungseinheit und eine Kraftwerkseinheit umfasst, vorgeschlagen. In einem ersten Betriebsmodus wird in der Luftbehandlungseinheit Luft nacheinander verdichtet, abgekühlt und entspannt und zur Gewinnung eines Luftverflüssigungsprodukts verwendet. Das Luftverflüssigungsprodukt wird vorzugsweise in einem Tanksystem gespeichert. Neben der Erzeugung des Luftverflüssigungsprodukts in dem ersten Betriebsmodus kann auch ein extern bereitgestelltes Luftverflüssigungsprodukt, beispielsweise aus einer separaten Luftbehandlungseinheit, in ein entsprechendes Tanksystem überführt werden.

In einem zweiten Betriebsmodus wird in der Luftbehandlungseinheit ein Luftverflüssigungsprodukt bei überatmoshärischem Druck verdampft oder pseudoverdampft, also in einen gasförmigen oder überkritischen Zustand überführt, und in der Kraftwerkseinheit zur Gewinnung von elektrischer Energie verwendet.

Ein verdampftes oder pseudoverdampftes Luftverflüssigungsprodukt "zur Gewinnung von elektrischer Energie zu verwenden" umfasst beispielsweise, einen entsprechenden, bei überatmoshärischem Druck in gasförmigem oder überkritischem Zustand vorliegenden Druckstrom und/oder einen hiervon abgeleiteten Druckstrom in wenigstens einer mit einem Generator gekoppelten Entspannungsturbine zu entspannen und hierdurch elektrische Energie zu gewinnen. Ein "abgeleiteter" Strom kann aus dem Druckstrom dabei durch Mischen bzw. Vereinigen mit wenigstens einem weiteren Strom und/oder durch zumindest teilweises chemisches Umsetzen zumindest einer Komponente des Druckstroms, beispielsweise in Form einer Verbrennungsreaktion, erhalten werden, wie unten unter Bezugnahme auf den Einsatz eines entsprechenden Druckstroms in einer Gasturbine oder Verbrennungsturbine erläutert. Typischerweise wird nur ein Teil des Druckstroms und/oder des hiervon abgeleiteten Druckstroms, beispielsweise 4 bis 5%, in der Brennkammer mit einem Brennstoff durch die Verbrennung chemisch umgesetzt, d.h. der Brennstoff wird in der Brennkammer mit einer deutlich überstöchiometrischen Menge des Sammelstroms bzw. des darin enthaltenen Sauerstoffs umgesetzt.

Diese erläuterten zwei Betriebsmodi ermöglichen es, wie bereits eingangs erwähnt, zu Billigstromzeiten oder Stromüberschusszeiten Luft zu einem Luftverflüssigungsprodukt zu verflüssigen und zu Spitzenlastzeiten dieses Luftverflüssigungsprodukt aus dem Tanksystem zu entnehmen. Das Verfahren ermöglicht dabei eine effektive Nutzung günstiger oder im Überschuss vorhandener elektrischer Energie und deren Zwischenspeicherung. Das erfindungsgemäße Verfahren kann dabei auch beispielsweise für Energiequellen zum Einsatz kommen, die nur temporär zur Erzeugung von elektrischer Energie zur Verfügung stehen.

In einem dritten Betriebsmodus wird in der Luftbehandlungseinheit Luft verdichtet und in der Kraftwerkseinheit zur Gewinnung von elektrischer Energie verwendet. Die Luft wird damit in dem dritten Betriebsmodus nicht verflüssigt sondern direkt unter Druck in die Kraftwerkseinheit überführt. Der dritte Betriebsmodus ermöglicht einen Betrieb einer entsprechenden Energieerzeugungsanlage auch dann, wenn beispielsweise kein Luftverflüssigungsprodukt zur Verfügung steht. Es erscheint auf den ersten Blick zwar unvorteilhaft, in dem dritten Betriebsmodus Luft zunächst zu verdichten und dann in der Kraftwerkseinheit zu entspannen, und hierdurch die zuvor investierte elektrische Energie wieder zurückzugewinnen. Die Nutzung einer entsprechenden Anlage kann durch diese Maßnahmen jedoch insgesamt verbessert werden, weil durch den dritten Betriebsmodus die vorhandenen Hardwarekomponenten besser ausgenutzt werden können. Mehrere dieser Hardwarekomponenten, beispielsweise Wärmetauscher und Pumpen, werden dabei sowohl in dem ersten Betriebsmodus als auch in dem zweiten Betriebsmodus verwendet. Sie können auch im dritten Betriebsmodus zum Einsatz kommen. Der dritte Betriebsmodus ermöglicht damit insbesondere einen unterbrechungsfreien Betrieb einer Vielzahl von Anlagenkomponenten, der sich in der Gesamtbetrachtung als besonders günstig erweist. Die Anlagenkomponenten können kontinuierlich und materialschonend betrieben werden.

Der erste Betriebsmodus wird im Rahmen der vorliegenden Anmeldung, wie erwähnt, auch als "Verflüssigungsbetrieb" bezeichnet. Der zweite Betriebsmodus wird im Rahmen der vorliegenden Anmeldung auch als "Entnahmebetrieb" bezeichnet. Der dritte Betriebsmodus, bei dem verdichtete Luft aus der Luftbehandlungseinheit direkt in die Kraftwerkseinheit überführt wird, wird im Rahmen der vorliegenden Anmeldung auch als "Direktbetrieb" bezeichnet.

Erfindungsgemäß ist vorgesehen, dass die Luft in dem ersten Betriebsmodus, die zur Gewinnung des Luftverflüssigungsprodukts verwendet wird, nacheinander im Gegenstrom gegen ein erstes und gegen ein zweites flüssiges Kältemittel aus einem entsprechenden Kältemittelsystem in einem Wärmetauschersystem abzukühlen. Dem Wärmetauschersystem, das hierzu, wie unten erläutert, insbesondere zwei Wärmetauscherblöcke aufweisen kann, wird das erste Kältemittel auf einem ersten Temperaturniveau zugeführt und nach Erwärmung (d.h. teilweise Übertragung seiner Kälte auf die Luft) auf einem zweiten Temperaturniveau entnommen. Das zweite Kältemittel wird dem Wärmetauschersystem zum Teil auf einem dritten Temperatumiveau und zum Teil auf einem vierten Temperaturniveau zugeführt und nach Erwärmung auf einem fünften Temperaturniveau entnommen.

Das Luftverflüssigungsprodukt wird in dem zweiten Betriebsmodus in umgekehrter Weise erwärmt, d.h. nacheinander im Gegenstrom gegen das zweite und gegen das erste Kältemittel in dem Wärmetauschersystem geführt. Das zweite Kältemittel wird nun auf dem fünften Temperaturniveau dem Wärmetauschersystem zugeführt und nach Abkühlung (d.h. Aufnahme von Kälte aus dem Luftverflüssigungsprodukt) zum Teil auf dem vierten Temperaturniveau und zum Teil auf dem dritten Temperaturniveau dem Wärmetauschersystem entnommen. Das erste Kältemittel wird dem Wärmetauschersystem auf dem zweiten Temperaturniveau zugeführt und nach entsprechender Abkühlung auf dem ersten Temperaturniveau entnommen. Beispiele für entsprechende Temperaturniveaus sind nachfolgend angegeben:
erstes Temperaturniveau (T1): 20 bis 50 °C
zweites Temperaturniveau (T2): -100 bis -70 °C
drittes Temperaturniveau (T3): -100 bis -70 °C
viertes Temperaturniveau (T4): -140 °C bis -100 °C
fünftes Temperaturniveau (T5): -180 bis -150 °C

Das zweite und das dritte Temperaturniveau können einander also im Rahmen der vorliegenden Erfindung auch entsprechen.

Erfindungsgemäß kommen also zwei flüssige Kältemittel zur Abkühlung der Luft und zur Erwärmung des Luftverflüssigungsprodukts zum Einsatz. Hierbei kann es sich beispielsweise um flüssige oder verflüssigte Kältemittel wie niederwertige Alkohole und/oder gesättigte oder halogenierte Kohlenwasserstoffe wie z.B. Propan handeln. Das erste Kältemittel weist dabei vorteilhafterweise einen höheren Siedepunkt auf als das zweite Kältemittel und wird daher auch als "warmes" Kältemittel bezeichnet. Das zweite Kältemittel wird aufgrund seines niedrigeren Siedepunkts auch als "kaltes" Kältemittel bezeichnet.

Mit entsprechenden Kältemitteln kann das Wärmeaustauschdiagramm eines verwendeten Wärmetauschersystems besonders günstig gestaltet werden. Die beiden flüssigen Kältemittel unterscheiden sich in ihrer chemischen Zusammensetzung und insbesondere in ihrem Siedepunkt. Als erstes flüssiges Kältemittel kommt insbesondere Methanol (Einsatzbereich bis -95 °C) und als zweites flüssiges Kältemittel insbesondere verflüssigtes Propan (Einsatzbereich bis-170 °C) zum Einsatz. Durch die Verwendung der zwei flüssigen Kältemittel, die bei der Abkühlung eines entsprechenden Luftstroms fühlbare Wärme aufnehmen, steht eine Speichermöglichkeit für Kälte zur Verfügung.

Die Kältemittel zur Verwendung in der Erfindung werden also insbesondere auf Grundlage des jeweiligen Siedepunkts ausgewählt. Dieser muss so gewählt werden, dass das Kältemittel im jeweiligen gesamten Arbeitsbereich flüssig ist.

Als erstes (warmes) Kältemittel kommen neben Methanol und Propan außerdem die in der nachfolgenden Tabelle aufgeführten niederwertigen Alkohole in Frage. Ferner eignen sich Aromaten wie beispielsweise Toluol.

Als zweites (kaltes) Kältemittel können hingegen beispielsweise Alkane und Alkene wie Ethan, Ethylen, Propan, Propylen, Butan. Pentan, Hexan usw. und/oder deren chlorierte und/oder fluorierte Derivate (FCKW) zum Einsatz kommen. Gemische derartiger Stoffe können ebenfalls verwendet werden.

| **Name** | **Schmelzpunkt in °C** | **Siedetemperatur in °C** |
|---|---|---|
| Methanol | -97,8 | 64,7 |
| Ethanol | -114,1 | 78,3 |
| Propan-1-ol | -126,2 | 97,2 |
| Butan-1-ol | -89,3 | 117,3 |
| Pentan-1-ol | -78,2 | 138 |
| Hexan-1-ol | -48,6 | 157,5 |
| Propan-2-ol | -88,5 | 82,3 |
| Butan-2-ol | -114,7 | 99,5 |
| 2-Methylpropan-1-ol | -108 | 108 |
| Pentan-2-ol | -50 | 118,9 |
| 2-Methylbutan-1-ol | -70 | 129 |
| 3-Methylbutan-1-ol | -117 | 130,8 |
| 1,2-Propandiol | -68 | 188 |
| Butan-1,2-diol | -114 | 192 |
| Butan-1,3-diol | unter -50 | 207,5 |
| Prop-2-en-1-ol | -129 | 97 |
| Pentan-1-ol | -78,2 | 128,0 |

Während der Abkühlung und Erwärmung bleiben beide Kältemittel flüssig. In dem Luftverflüssigungsprodukt gespeicherte Kälte wird somit auf mehreren Temperaturniveaus auf die beiden Kältemittel übertragen und steht für die Erzeugung des Verflüssigungsprodukts in dem ersten Betriebsmodus wieder zur Verfügung. Im Gegensatz zu der ansonsten üblichen Verdampfung oder Pseudoverdampfung eines entsprechenden Verflüssigungsprodukts gegen einen Wärmeträger wie atmosphärische Luft oder heißen Wasserdampf geht die Verflüssigungskälte aus dem Luftverflüssigungsprodukt nicht oder nicht vollständig verloren. Gleichzeitig wird die Anzahl von Hardwarekomponenten wie Wärmetauschern, Turbinen und/oder Verdichtern reduziert, die Kosten für die gesamte Energieerzeugungsanlage werden vermindert und die Wirtschaftlichkeit wird erhöht.

Selbstverständlich können in der Erfindung auch ein oder mehrere weitere Kältemittel eingesetzt werden. Dadurch kann das Wärmeaustauschdiagramm weiter optimiert werden; allerdings wird auch der apparative und regelungstechnische Aufwand höher. Die Anwärmung und Abkühlung der Kältemittel wird dabei in dem Wärmetauschersystem der Luftbehandlungsanlage durchgeführt, das ohnehin für die Abkühlung der Luft im ersten Betriebsmodus und die Anwärmung des Verflüssigungsprodukts im zweiten Betriebsmodus vorhanden ist.

Besonders vorteilhaft ist es, das zweite Kältemittel in dem ersten Betriebsmodus dem Wärmetauschersystem in Form von Teilströmen auf dem dritten Temperaturniveau und auf dem vierten Temperaturniveau zuzuführen und in Form eines Sammelstroms auf dem fünften Temperaturniveau zu entnehmen. Die Teilströme werden dabei in dem Wärmetauschersystem zu dem Sammelstrom vereinigt.

In entsprechender Weise wird das zweite Kältemittel in dem zweiten Betriebsmodus dem Wärmetauschersystem vorteilhafterweise in Form eines Sammelstroms auf dem fünften Temperaturniveau zugeführt und in Form von Teilströmen auf dem vierten Temperaturniveau und auf dem dritten Temperaturniveau entnommen. Auch die Aufteilung des Sammelstroms in die Teilströme erfolgt dabei in dem Wärmetauschersystem, wobei der Sammelstrom und die Teilströme im ersten und zweiten Betriebsmodus vorteilhafterweise durch dieselben Passagen des Wärmetauschersystems geführt werden.

Besonders vorteilhaft kann sein, jeweils einen Strom eines nichtkondensierenden Gases im Gegenstrom zu dem ersten und dem zweiten Kältemittel durch das Wärmetauschersystem zu führen. Ein entsprechendes nichtkondensierendes Gas, beispielsweise Stickstoff, kann dabei das jeweilige Kältemittel in entsprechenden Kältemitteltanks überlagern und zur Druckbeaufschlagung verwendet werden.

Die Anwärmung des ersten flüssigen Kältemittels in dem ersten Betriebsmodus wird also vorzugsweise in denselben Passagengruppen des Wärmetauschersystems durchgeführt, in denen die Abkühlung des ersten flüssigen Kältemittels in dem zweiten Betriebsmodus erfolgt. Entsprechendes gilt für das zweite flüssige Kältemittel. Damit kann in beiden Betriebsmodi derselbe Apparat eingesetzt werden. Analog dazu können im ersten und im zweiten Betriebsmodus dieselben Pumpen eingesetzt werden, jeweils eine für den Transport des ersten und des zweiten flüssigen Kältemittels.

Das erste Kältemittel wird vorteilhafterweise zwischen zwei Kältemitteltanks (einem "kalten" Kältemitteltank auf dem ersten Temperaturniveau sowie einem "warmen" Kältemitteltank auf dem zweiten Temperaturniveau) mit einem entsprechenden Pumpensystem hin und her gepumpt. Während des ersten Betriebsmodus wird das erste flüssige Kältemittel dabei aus dem kalten in den warmen Kältemitteltank gepumpt, im zweiten Betriebsmodus umgekehrt.

Das zweite Kältemittel wird zwischen drei, genauer zwischen einem und zwei anderen Kältemitteltanks (einem "kalten" Kältemitteltank auf dem dritten, einem "temperierten" Kältemitteltank auf dem vierten und einem "warmen" Kältemitteltank auf dem fünften Temperaturniveau), ebenfalls mit einem entsprechenden Pumpensystem, hin und her gepumpt. Während des ersten Betriebsmodus wird das zweite Kältemittel dabei aus dem kalten und dem temperierten Kältemitteltank in Form zweier Teilströme entnommen und dem Wärmetauschersystem zugeführt. Nach Erwärmung und ggf. Vereinigung zu einem Sammelstrom wird das zweite Kältemittel in den warmen Kältemitteltank überführt. Im zweiten Betriebsmodus wird das zweite Kältemittel als Sammelstrom dem warmen Kältemitteltank entnommen und dem Wärmetauschersystem zugeführt. Dort wird der Sammelstrom abgekühlt und in die zwei Teilströme aufgeteilt. Das zweite Kältemittel durchläuft das Wärmetauschersystem dabei über unterschiedliche Wärmeaustauschstrecken und wird daher unterschiedlich (auf das vierte und das dritte Temperaturniveau) abgekühlt. Die entsprechenden Teilströme werden anschließend in dem zweiten Betriebsmodus in den temperierten und den kalten Kältemitteltank überführt.

Ein weiterer zentraler Aspekt der vorliegenden Erfindung ist die stufenweise Verdichtung der Luft in dem ersten und dem dritten Betriebsmodus und das Einspeisen der Luft bei unterschiedlichen Drücken in die Kraftwerkseinheit in dem dritten Betriebsmodus. Dies erfolgt derart, dass das Verdichten der in dem ersten Betriebsmodus zur Gewinnung des Luftverflüssigungsprodukts verwendeten Luft nacheinander von einem ersten Druckniveau zunächst auf ein zweites Druckniveau, danach auf ein drittes Druckniveau und schließlich auf ein viertes Druckniveau erfolgt. Das Luftverflüssigungsprodukt wird in dem zweiten Betriebsmodus insbesondere auf einem fünften Druckniveau erwärmt, das unterhalb des vierten Druckniveaus liegt. Zumindest das vierte oder fünfte Druckniveau kann bei überkritischem Druck liegen.

Im Rahmen der vorliegenden Erfindung werden dabei insbesondere die nachfolgend angegebenen Druckniveaus verwendet:
erstes Druckniveau (LP): 0 bis 2 bar, insbesondere 1,4 bar
zweites Druckniveau (MP): 4 bis 8 bar, insbesondere 5,6 bar
drittes Druckniveau (MP1): 12 bis 50 bar, insbesondere 17 bar
viertes Druckniveau (HP): 50 bis 100 bar, insbesondere 85 bar
fünftes Druckniveau (HP1): 50 bis 100 bar, insbesondere 65 bar

Schließlich kann in dem dritten Betriebsmodus das Verdichten der zur Gewinnung der elektrischen Energie verwendeten Luft zu einem ersten Anteil auf das dritte Druckniveau und einem zweiten Anteil auf das vierte Druckniveau oder auf das fünfte Druckniveau erfolgen. Der erste und der zweite Anteil werden dabei insbesondere getrennt voneinander in die Kraftwerkseinheit überführt. Dies erlaubt einen besonders effektiven Betrieb einer entsprechenden Energieerzeugungsanlage in dem dritten Betriebsmodus, weil hierbei entsprechende Druckstufen einer Kraftwerkseinheit besonders effizient bedient werden können. Nur ein Teil der verwendeten Luft muss tatsächlich durch den Nachverdichter geführt werden. Der Hauptverdichter kann mit einer höheren Verdichterleistung betrieben werden und eine größere Luftmenge liefern. Die Luft muss nicht vollständig nachverdichtet, sondern kann teilweise auch direkt in die Kraftwerkseinheit überführt werden.

Im Rahmen der vorliegenden Erfindung wird die Kraftwerkseinheit in dem zweiten Betriebsmodus und in dem dritten Betriebsmodus betrieben, wobei in dem zweiten Betriebsmodus das unter Druck erwärmte und in den gasförmigen oder überkritischen Zustand überführte Luftverflüssigungsprodukt, vorzugsweise bei überkritischem Druck, in der Kraftwerkseinheit durch eine Brennkammer geführt wird, in der ein Brennstoff verbrannt wird. Ein Abgas aus der Brennkammer wird mit dem dritten Druckniveau gemäß einer ersten Ausführungsform einer mit einem Generator gekoppelten Entspannungsturbine zugeführt. Es handelt sich also um eine Erzeugung elektrischer Energie mittels einer Verbrennungsturbine oder einer Gasturbine.

Es kann auch vorgesehen sein, dass in dem zweiten Betriebsmodus das in der Luftbehandlungseinheit unter Druck erwärmte und in den gasförmigen oder überkritischen Zustand überführte Luftverflüssigungsprodukt in der Kraftwerkseinheit vor dem Führen durch die Brennkammer auf dem fünften Druckniveau einer weiteren mit einem Generator gekoppelten Entspannungseinheit zugeführt wird. Vorteilhafterweise wird auch das Abgas einer Brennkammer stromab der Entspannungseinheit entsprechend genutzt, beispielsweise einem Abwärmedampferzeuger zugeführt und dort zur Erzeugung von Dampf verwendet.

In jedem Fall kann eine Heißgasturbine, wie eingangs erläutert, verwendet werden. Diese kann anstelle einer Gas- oder Verbrennungsturbine verwendet werden. Insbesondere einer der Anteile der Luft, die in dem dritten Betriebsmodus zu einem ersten Anteil auf das dritte Druckniveau und zu einem zweiten Anteil auf das vierte Druckniveau oder das fünfte Druckniveau verdichtet wird, kann dabei durch Erhitzen druckerhöht werden.

Zum Erhitzen können beispielsweise Abwärme und/oder Solarwärme verwendet werden. Ein entsprechendes Erhitzen kann dabei selbstverständlich auch bezüglich des in dem zweiten Betriebsmodus in der Luftbehandlungseinheit unter Druck erwärmten und in den gasförmigen oder überkritischen Zustand überführten Luftverflüssigungsprodukts erfolgen.

Zur Verringerung bzw. Symmetrisierung einer Achslast eines im Rahmen der Erfindung verwendeten Generators kann dieser auch mit einer Achse bzw. Welle ausgebildet sein, die mit beidseitig des Generators angeordneten Entspannungsturbinen ausgestattet ist. Durch eine derartige symmetrische Anordnung wird eine einseitige Beanspruchung eines Generators verringert. Besonders vorteilhaft ist es dabei, den Sammelstrom oder den hiervon abgeleiteten Strom, beispielsweise stromauf oder stromab eines Erhitzers und/oder einer Brennkammer, in zwei oder mehr Teilströme aufzuteilen, von denen jeder in einer mit einem gemeinsamen Generator gekoppelten Entspannungsturbine entspannt wird.

Die vorliegenden Erläuterungen betreffen in gleicher Weise eine Energieerzeugungsanlage, die Mittel zur Durchführung des zuvor erläuterten Verfahrens aufweist. Eine entsprechende Energieerzeugungsanlage ist insbesondere dafür eingerichtet, ein entsprechendes Verfahren durchzuführen.

Die Erfindung und bevorzugte Ausführungsformen der Erfindung sind in den beigefügten Figuren näher erläutert.

Kurze Beschreibung der Zeichnungen
- Figur 1A: zeigt eine Energieerzeugungsanlage gemäß einer Ausführungsform der Erfindung in einem ersten Betriebsmodus.
- Figur 1B: zeigt die Energieerzeugungsanlage der Figur 1A in einem zweiten Betriebsmodus.
- Figur 1C: zeigt die Energieerzeugungsanlage der Figur 1A in einem dritten Betriebsmodus.
- Figur 2A: zeigt ein erstes Kältemittelteilsystem gemäß einer Ausführungsform der Erfindung in dem ersten Betriebsmodus.
- Figur 2B: zeigt das Kältemittelteilsystem der Figur 2A in dem zweiten Betriebsmodus.
- Figur 3A: zeigt ein zweites Kältemittelteilsystem gemäß einer Ausführungsform der Erfindung in dem ersten Betriebsmodus.
- Figur 3B: zeigt das Kältemittelteilsystem der Figur 3A in dem zweiten Betriebsmodus.
- Figur 4A: zeigt eine Energieerzeugungsanlage gemäß einer Ausführungsform der Erfindung in dem ersten Betriebsmodus.
- Figur 4B: zeigt die Energieerzeugungsanlage der Figur 4A in dem zweiten Betriebsmodus.
- Figur 4C: zeigt die Energieerzeugungsanlage der Figur 4A in dem dritten Betriebsmodus.
- Figur 5: zeigt ein Wärmetauschersystem gemäß einer Ausführungsform der Erfindung in dem ersten Betriebsmodus.
- Figur 6: zeigt ein Wärmetauschersystem gemäß einer Ausführungsform der Erfindung in dem zweiten Betriebsmodus.

### Ausführliche Beschreibung der Zeichnungen

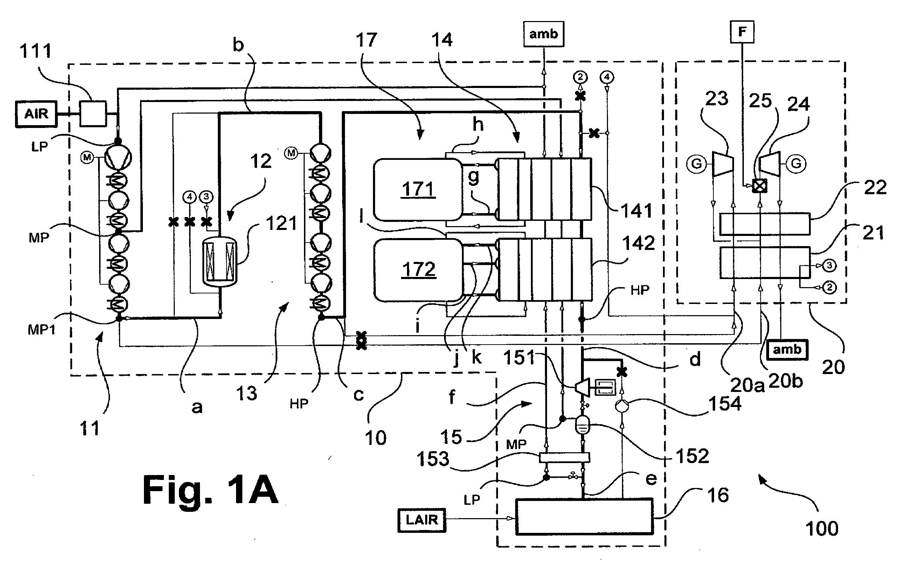

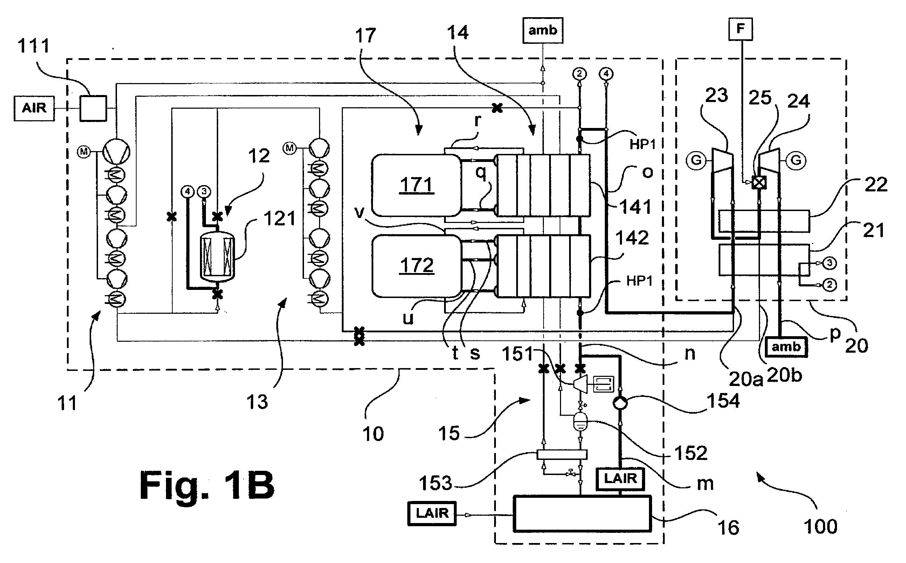

In den Figuren tragen einander entsprechende Elemente identische Bezugszeichen. Auf eine wiederholte Erläuterung wird der Übersichtlichkeit halber verzichtet. Sämtliche Figuren zeigen dabei Anlagendiagramme von Energieerzeugungsanlagen bzw. deren Teilen in stark vereinfachter, schematischer Darstellung. Hierbei sind teilweise unterschiedliche Betriebsmodi (vgl. Figur 1A, 2A, 3A und 4A gegenüber Figur 1B, 2B, 3B und 4B bzw. Figur 1C und 4C) im Vergleich zueinander dargestellt. Diese Betriebsmodi unterscheiden sich unter anderem in der Schaltung einer Vielzahl von in einer entsprechenden Anlage vorgesehenen Ventilen. Die Ventile sind nicht im Einzelnen dargestellt. Dies betrifft insbesondere leitend (durchlässig) geschaltete Ventile. Durch entsprechende Ventile versperrte Leitungen bzw. inaktive Ströme sind jedoch durchkreuzt (-x-) dargestellt.

Figur 1A zeigt eine Energieerzeugungsanlage gemäß einer Ausführungsform der Erfindung in einem ersten Betriebsmodus. Dieser erste Betriebsmodus entspricht dabei dem bereits mehrfach erläuterten Verflüssigungsbetrieb. Unter "Verflüssigungsbetrieb" sei dabei verstanden, dass in dem ersten Betriebsmodus eine gewisse Menge eines tiefkalten Verflüssigungsprodukts aus Luft erzeugt und in einem Tanksystem gespeichert wird. Ein "Verflüssigungsbetrieb" bedeutet jedoch nicht, dass das Luftverflüssigungsprodukt ausschließlich durch eine entsprechende Energieerzeugungsanlage bereitgestellt wird. Vielmehr kann ein entsprechendes Tanksystem auch teilweise durch ein extern zugeführtes, tiefkaltes Luftverflüssigungsprodukt befüllt werden, insbesondere wenn die Kapazität der Energieerzeugungsanlage zur Erzeugung ihres gesamten Bedarfs an einem entsprechenden Luftverflüssigungsprodukt nicht ausreicht.

Die in Figur 1A dargestellte Energieerzeugungsanlage umfasst Komponenten einer Luftbehandlungseinheit, die gestrichelt umfasst und insgesamt mit 10 angegeben sind, sowie Komponenten einer Kraftwerkseinheit, die gestrichelt umfasst und insgesamt mit 20 angegeben sind. Die Energieerzeugungsanlage ist insgesamt mit 100 bezeichnet.

In der Energieerzeugungsanlage 100 bzw. deren Luftbehandlungseinheit 10 wird über ein Hauptverdichtersystem 11 Umgebungsluft AIR über ein Filter 111 angesaugt. Am Eingang des Hauptverdichtersystems liegt die Luft AIR auf einem ersten Druckniveau LP von typischerweise 0 bis 2 bar, beispielsweise 1,4 bar, vor.

Das Hauptverdichtersystem 11 kann insbesondere über mehrere Verdichterstufen verfügen (nicht näher bezeichnet), die über einen gemeinsamen Verdichterantrieb M bzw. eine gemeinsame Welle angetrieben werden können. Ein Hauptverdichtersystem 11 kann ferner Mittel zur Zwischen- und Nachkühlung eines entsprechend stufenweise verdichteten Stroms umfassen. Zwischen den Verdichterstufen, wo auch weitere Ströme zugespeist werden können, liegt die Luft AIR auf einem zweiten Druckniveau MP von typischerweise 4 bis 8 bar, beispielsweise 5,6 bar, vor. Das Hauptverdichtersystem 11 insgesamt ist zum Verdichten der Luft AIR auf ein drittes Druckniveau MP1 von typischerweise 12 bis 50 bar, beispielsweise 17 bar, an dessen Ausgang eingerichtet.

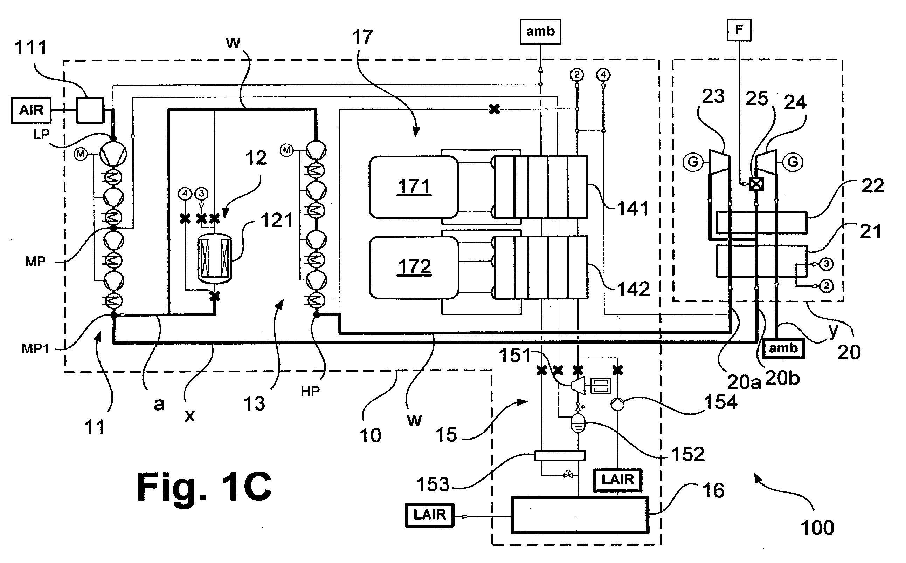

Ein auf das dritte Druckniveau Druck MP1 verdichteter Strom a wird in ein Reinigungssystem 12 überführt, das beispielsweise einen mit einem geeigneten Adsorbermaterial gefüllten Adsorberbehälter 121 aufweisen kann. Der Adsorberbehälter 121 kann zyklisch regeneriert werden, was auch in den nachfolgenden Figuren 1B und 1C veranschaulicht ist. Ein entsprechend aufgereinigter Strom b wird anschließend einem Nachverdichtersystem 13 zugeführt und dort auf ein nochmals höheres viertes Druckniveau HP von typischerweise 50 bis 100 bar, beispielsweise 85 bar, verdichtet. Auch das Nachverdichtersystem 13 kann mehrere Verdichterstufen aufweisen, die mittels eines gemeinsamen Verdichterantriebs M angetrieben werden.

Der nachverdichtete Strom c wird einer Wärmetauschereinheit 14 zugeführt, die im dargestellten Beispiel einen ersten Wärmetauscherblock 141 und einen zweiten Wärmetauscherblock 142 umfasst. Der Strom c wird dabei zunächst durch den ersten Wärmetauscherblock 141 und anschließend durch den zweiten Wärmetauscherblock 142 geführt. Nach der Abkühlung in dem Wärmetauschersystem 14 liegt ein entsprechend abgekühlter Strom d vor. Dieser liegt im Wesentlichen noch auf dem vierten Druckniveau HP vor, wobei auch durch die Abkühlung bedingte Druckverluste, Leitungsverluste und dergleichen berücksichtigt sind.

Der abgekühlte Strom d wird anschließend einer Entspannungseinrichtung 151 zugeführt, die beispielsweise eine ölgebremste Entspannungsturbine umfassen kann. Die Entspannungseinrichtung 151 ist Teil eines Verflüssigungssystems 15. In der Entspannungseinrichtung 151 wird der Strom d auf ein niedrigeres Druckniveau entspannt, beispielsweise auf das zweite Druckniveau MP. Der Strom d kann dabei zusätzlich auch mit einem hier nicht näher bezeichneten Ventil entspannt werden.

Der entspannte Strom d wird nach der Entspannung in einen Abscheiderbehälter 152 überführt, in dem sich sumpfseitig eine flüssige Fraktion abscheidet. Vom Kopf des Abscheiderbehälters 152 kann ein gasförmiges Fluid (ohne Bezeichnung) abgezogen werden. Da dieses auf dem zweiten Druckniveau MP liegt, kann es in den Wärmetauscherblöcken 142 und 141 des Wärmetauschersystems 14 erwärmt und dem Hauptverdichtersystem 11 an einer Zwischenstelle erneut zugeführt werden.

Aus dem Sumpf des Abscheiderbehälters 152 wird eine flüssige Fraktion, also ein Luftverflüssigungsprodukt der Luft AIR, hier Flüssigluft LAIR, abgeschieden und durch einen Unterkühler 153 geführt. Ausgangsseitig des Unterkühlers wird dadurch ein tiefkalter, flüssiger Strom e erhalten, der in ein Tanksystem 16 mit einem Tieftemperaturtank überführt werden kann. Wie erläutert, kann dem Tanksystem 16 auch ein weiteres Verflüssigungsprodukt, beispielsweise Flüssigluft LAIR, extern zugeführt werden.

Der Unterkühler 153 kann mit einem Teilstrom des tiefkalten flüssigen Stroms e betrieben werden, der auf das erste Druckniveau LP entspannt und im Gegenstrom durch den Unterkühler 153 geführt wird. Ein entsprechend erhaltener Strom f kann anschließend in den Wärmetauscherblöcken 142 und 141 des Wärmetauschersystems 14 angewärmt und beispielsweise an die Umgebung amb abgegeben werden. Der Strom f kann auch stromauf des Hauptverdichtersystems 11 erneut dem Hauptverdichtersystem 11 zugeführt werden.

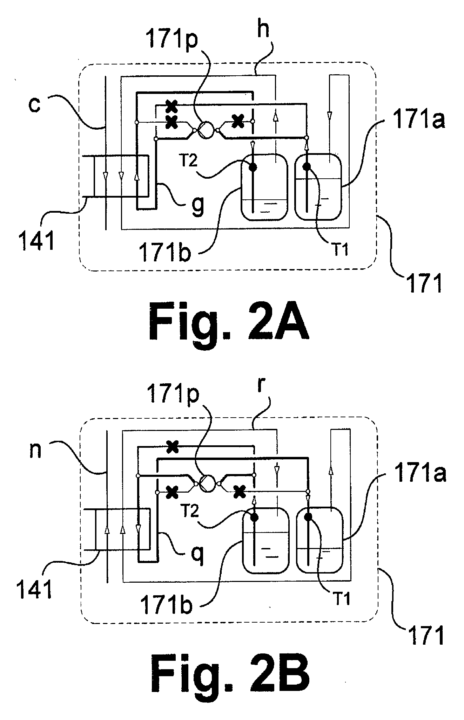

Zur Temperierung des ersten Wärmetauscherblocks 141 und des zweiten Wärmetauscherblocks 142 des Wärmetauschersystems 14 ist ein Kältemittelsystem 17 vorgesehen, das ein erstes Kältemittelteilsystem 171 und ein zweites Kältemittelteilsystem 172 umfasst. Das erste Kältemittelteilsystem 171 und das zweite Kältemittelteilsystem 172 des Kältemittelsystems 17 sind unter Bezugnahme auf die nachfolgenden Figuren 2A bis 3B näher erläutert. Bereits an dieser Stelle sei darauf hingewiesen, dass mittels des ersten Kältemittelteilsystems 171 in dem ersten Betriebsmodus, wie er in Figur 1A dargestellt ist, ein Kältemittelstrom g eines ersten flüssigen Kältemittels aus dem ersten Kältemittelteilsystem 171 vom kalten Ende zum warmen Ende durch den ersten Wärmetauscherblock 141 geführt wird. Der Kältemittelstrom g des ersten Kältemittels erwärmt sich hierdurch von dem ersten Temperaturniveau T1 (siehe oben) auf das zweite Temperaturniveau T2 und kühlt im Gegenstrom den warmen Strom c. Im Gegenstrom zu dem Kältemittelstrom g des ersten Kältemittels aus dem ersten Kältemittelteilsystem 171 wird ein gasförmiger Strom h geführt, bei dem es sich um ein das erste Kältemittel in entsprechenden Kältemitteltanks des ersten Kältemittelteilsystems 171 überlagerndes, nicht kondensierendes Gas handelt.

Aus dem zweiten Kältemittelteilsystem 172 werden ein Strom i und ein Strom j eines zweiten flüssigen Kältemittels dem zweiten Wärmetauscherblock 142 des Wärmetauschersystems 14 an dessen kaltem Ende (auf dem dritten Temperaturniveau T3) und an einer Zwischenstelle (auf dem vierten Temperaturniveau T4) zugeführt. Der Strom i und der Strom j des zweiten Kältemittels werden in dem zweiten Wärmetauscherblock 142 vereinigt, zuvor bzw. danach erwärmt, und als Strom k dem zweiten Wärmetauscherblock 142 an dessen warmem Ende entnommen. Hierdurch erwärmt sich das zweite Kältemittel auf das fünfte Temperaturniveau T5. Wiederum handelt es sich bei einem Strom I um ein nichtkondensierendes Gas, das das zweite Kältemittel i in entsprechenden Speichertanks überlagert.

In dem in Figur 1A dargestellten ersten Betriebsmodus ist die Kraftwerkseinheit 20 der Energieerzeugungsanlage 100 nicht in Betrieb oder wird nur mittels extern zugeführter Medien betrieben. Sie wird daher in den nachfolgenden Figuren erläutert.

Figur 1B zeigt die Energieerzeugungsanlage 100 in einem zweiten Betriebsmodus. Hierbei handelt es sich um den mehrfach erläuterten Entnahmebetrieb, wobei unter einem "Entnahmebetrieb" ein Betriebsmodus verstanden wird, bei dem der Energieerzeugungsanlage 100 keine Luft zugeführt, sondern nur ein Luftverflüssigungsprodukt aus einem Tanksystem 16 entnommen wird. In dem Entnahmebetrieb, wie er in Figur 1B dargestellt ist, wird keine Luft mittels des Hauptverdichtersystems 11 angesaugt. Das Reinigungssystem 12 befindet sich in Regeneration, wobei ein erwärmter Strom (vgl. Verknüpfungen 3 und 4 und unten angegebene Erläuterungen zu dem Wärmetauscher 21 der Kraftwerkseinheit 20) im Gegenstrom zu der in dem ersten Betriebsmodus (vgl. Figur 1A) durch einen entsprechenden Adsorberbehälter 121 geführten Luft diesen durchströmt und damit adsorbierte Komponenten aus dem Adsorberbehälter löst. Ein entsprechender Regenerationsstrom kann anschließend stromab erneut in die Luftbehandlungseinheit 10 bzw. die Kraftwerkseinheit 20 eingespeist werden (vgl. Strom o stromab des ersten Wärmetauscherblocks 141 in dieser Figur).

In dem in Figur 1B dargestellten zweiten Betriebsmodus wird dem Speichertank 16 ein Strom m eines tiefkalten Verflüssigungsprodukts, hier Flüssigluft LAIR, entnommen. Der Strom m wird mittels einer Pumpe 154 flüssig auf Druck gebracht. Stromab der Pumpe 154 liegt ein entsprechender Strom n auf einem fünften Druckniveau HP1 von typischerweise 50 bis 100 bar, beispielsweise einem Druck von 65 bar, vor. Der Strom n wird anschließend in dem Wärmetauschersystem 14, d.h. nacheinander in dem zweiten Wärmetauscherblock 142 und dem ersten Wärmetauscherblock 141, in einen gasförmigen oder überkritischen Zustand überführt, also verdampft bzw. pseudoverdampft. Im dargestellten Beispiel wird der Strom n typischerweise bei einem überkritischen Druck in einen überkritischen Zustand überführt, also pseudoverdampft. Der erhaltene Strom o wird dem ersten Wärmetauscherblock 141 an dessen warmem Ende entnommen. An dieser Stelle kann beispielsweise ein Teilstrom abgezweigt und später zurückgeführt werden (vgl. Verknüpfungen 2 und 4), der nach Erwärmung in dem nachfolgend erläuterten Wärmetauscher 21 (vgl. Verknüpfungen 2 und 3) als Regenerationsgas in dem Reinigungssystem 12 (vgl. Verknüpfungen 3 und 4) verwendet werden kann.

Das Kältemittelsystem 17 wird in dem zweiten Betriebsmodus der Energieerzeugungsanlage 100, der in Figur 1B dargestellt ist, umgekehrt zu dem ersten Betriebsmodus, der in Figur 1A dargestellt ist, betrieben. Dies bedeutet, dass mittels des ersten Kältemittelteilsystems 171 ein Kältemittelstrom q des ersten Kältemittels vom warmen Ende zum kalten Ende durch den ersten Wärmetauscherblock 141 geführt wird (ein entsprechender Gasstrom r wird im Gegenstrom hierzu geführt) und sich daher von dem zweiten Temperaturniveau T2 auf das erste Temperaturniveau T1 abkühlt. Ein Kältemittelstrom s des zweiten Kältemittelteilsystems 172 wird dem zweiten Wärmetauscherblock 142 an dessen warmen Ende (auf dem fünften TemperaturniveauT5) zugeführt. Dieser wird aufgeteilt. Die erhaltenen Teilströme t und u werden dem zweiten Wärmetauscherblock 142 bei unterschiedlichen kälteren Temperaturen, d.h. auf dem vierten Temperaturniveau T4 und auf dem dritten Temperaturniveau T3, entnommen. Durch die erläuterte Führung des ersten und des zweiten Kältemittels aus dem ersten und dem zweiten Kältemittelteilsystem 171 bzw. 172 in dem ersten Wärmetauscherblock 141 und dem zweiten Wärmetauscherblock 142 können diese im Gegenstrom zu dem Strom n abgekühlt werden. Die Verwendung des Kältemittels 17 erlaubt damit die Speicherung der bei dem Verdampfen bzw. Pseudoverdampfen des Stroms n frei werdenden Kälte.

Der Strom o kann mit dem entsprechenden Druck, d.h. auf dem fünften Druckniveau HP1, aus der Luftbehandlungseinheit 10 ausgeleitet und in die Kraftwerkseinheit 20 überführt werden. Die Kraftwerkseinheit 20 verfügt im dargestellten Beispiel über zumindest zwei Fluideingänge 20a und 20b, wobei der Strom a in dem in Figur 1 B dargestellten zweiten Betriebsmodus dem Fluideingang 20a zugeführt wird. In dem in Figur 1B dargestellten zweiten Betriebsmodus ist der Fluideingang 20b nicht aktiv bzw. wird in dem zweiten Betriebsmodus nicht bedient.

Der Strom o wird durch einen Wärmetauscher 21 der Kraftwerkseinheit 20 geführt und dort im Gegenstrom zu Abgas einer nachfolgend erläuterten Gasturbineneinheit erwärmt. In dem Wärmetauscher 21 kann auch Regeneriergas für das Reinigungssystem 12 erwärmt werden, wie zuvor angegeben (vgl. Verknüpfungen 2 und 3). Nach der Erwärmung in dem Wärmetauscher 21 der Kraftwerkseinheit 20 wird der Strom o in einer Entspannungsturbine 23, die mit einem Generator G gekoppelt ist, entspannt. Der entspannte Strom o kann anschließend in einem weiteren Wärmetauscher 22 erwärmt und durch eine Brennkammer 25 geführt werden. In der Brennkammer 25 wird ein geeigneter Brennstoff F, beispielsweise Erdgas, in der durch den Strom o gebildeten Gasatmosphäre verbrannt. Selbstverständlich können an dieser Stelle auch weitere Ströme, beispielsweise ein sauerstoffangereicherter Strom, zugespeist werden. Durch die Verbrennung des Brennstoffs F in der Brennkammer 25 wird das Volumen des Stroms o vergrößert, es wird also ein von dem Strom o abgeleiteter Strom gebildet. Dieser kann einer Entspannungsturbine 24, die ebenfalls mit einem Generator G gekoppelt sein kann, zugeführt. Gegebenenfalls können die Entspannungsturbinen 23 und 24 auch mit einem gemeinsamen Generator G gekoppelt sein. Durch die Entspannung in den Entspannungsturbinen 23 und 24 wird in den Generatoren G elektrische Energie erzeugt.

Das nach der Entspannung in der Entspannungsturbine 24 noch warme Gas kann in den Wärmetauschern 22 und 21 als Strom p zur Erwärmung des bereits erläuterten Stroms o verwendet werden. Der entsprechend abgekühlte Strom p wird an die Atmosphäre amb abgeblasen, gegebenenfalls nach weiteren Aufreinigungsschritten.

Figur 1C zeigt die Energieerzeugungsanlage der zuvor erläuterten Figuren 1A und 1 B in einem dritten Betriebsmodus. Dieser dritte Betriebsmodus wird, wie erläutert, im Rahmen dieser Anmeldung als Direktbetrieb bezeichnet. Der Begriff "Direktbetrieb" meint dabei, dass in dem Hauptverdichtersystem 11 und in dem Nachverdichtersystem 13 verdichtete Ströme, hier mit w und x bezeichnet, mit den entsprechenden Druckniveaus, nämlich dem dritten Druckniveau MP1 (Strom x) und dem vierten Druckniveau HP (Strom w) direkt in die Kraftwerkseinheit 20 überführt werden. Dieser Direktbetrieb erlaubt einen Betrieb der Energieerzeugungsanlage 100 auch dann, wenn das Wärmetauschersystem 14 und/oder das Verftüssigungssystem 15 nicht in Betrieb sind und damit kein entsprechender Strom o (vgl. Figur 1B) bereitsteht.

In dem in der Figur 1C dargestellten dritten Betriebsmodus werden beide Fluideingänge 20a und 20b der Kraftwerkseinheit beschickt, und zwar mit den Strömen w und x, die entsprechende Drücke aufweisen. Der Strom w auf dem vierten Druckniveau HP wird dabei nun zunächst durch die Entspannungsturbine 23 geführt und anschließend bei einem entsprechend reduzierten Druckniveau mit dem Strom x auf dem dritten Druckniveau MP1 vereinigt. Ein hierdurch erhaltener Sammelstrom wird durch die Brennkammer 25 und durch die Entspannungsturbine 24 geführt.

In sämtlichen Betriebszuständen der Figuren 1A bis 1C kann zusätzliches Fluid dem Tanksystem 16 zugeführt werden, insbesondere dann, wenn das in dem ersten Betriebsmodus, der in der Figur 1 dargestellt ist, erzeugte Luftverflüssigungsprodukt nicht zur Befüllung des Tanksystems 16 bzw. zur Deckung des Bedarfs an Fluid in dem zweiten Betriebsmodus ausreicht.

In den Figuren 2A und 2B ist jeweils das erste Kältemittelteilsystem 171 des Kältemittelsystems 17 in dem ersten und in dem zweiten Betriebsmodus (vgl. Figuren 1A und 1B) dargestellt. Figur 2A zeigt den ersten Betriebsmodus, Figur 2B den zweiten Betriebsmodus.

Das erste Kältemittelteilsystem 171 umfasst einen ersten (kalten) Kältemitteltank 171a und einen zweiten (warmen) Kältemitteltank 171 b. In dem ersten und dem zweiten Kältemitteltank 171a und 171b liegt das verwendete Kältemittel jeweils in flüssiger Form vor und ist mit einem entsprechenden nichtkondensierenden Gas überlagert, um eine ausreichende Druckbeaufschlagung des Kältemittels sicherzustellen. Bei dem nichtkondensierenden Gas kann es sich beispielsweise um Stickstoff handeln. Ferner ist eine Pumpe 171p vorgesehen.

Durch die in der Figur 2A dargestellte Beschaltung der im Übrigen nicht näher bezeichneten Leitungen des ersten Kältemittelteilsystems 171 in dem ersten Betriebsmodus wird der bereits erläuterte Kältemittelstrom g des ersten Kältemittels aus dem ersten Kältemittelteilsystem 172 erzeugt, d.h. entsprechendes Kältemittel auf dem ersten Temperaturniveau T1 wird aus dem ersten Kältemitteltank 171a des ersten Kältemittelteilsystems 171 durch den ersten Wärmetauscherblock 141 des Wärmetauschersystems 14 geführt, dort erwärmt und auf dem zweiten Temperaturniveau T2 in den zweiten Kältemitteltank 171b des ersten Kältemittelteilsystems 171 überführt. Hierdurch kann der Strom c abgekühlt werden.

Figur 2B zeigt den umgekehrten Betrieb des ersten Kältemittelteilsystems 171, wie er in dem zweiten Betriebsmodus realisiert ist. In diesem Fall wird, wie erläutert, ein Strom n in dem ersten Wärmetauscherblock 141 verdampft bzw. pseudoverdampft. Hierzu wird ein entsprechender Kältemittelstrom q des ersten Kältemittels in dem ersten Kältemittelteilsystem 171 erzeugt, indem Kältemittel aus dem zweiten Kältemitteltank 171b in den ersten Kältemitteltank 171a mittels der Pumpe 171p überführt wird. Der gasförmige Strom r verläuft im Gegenstrom dazu.

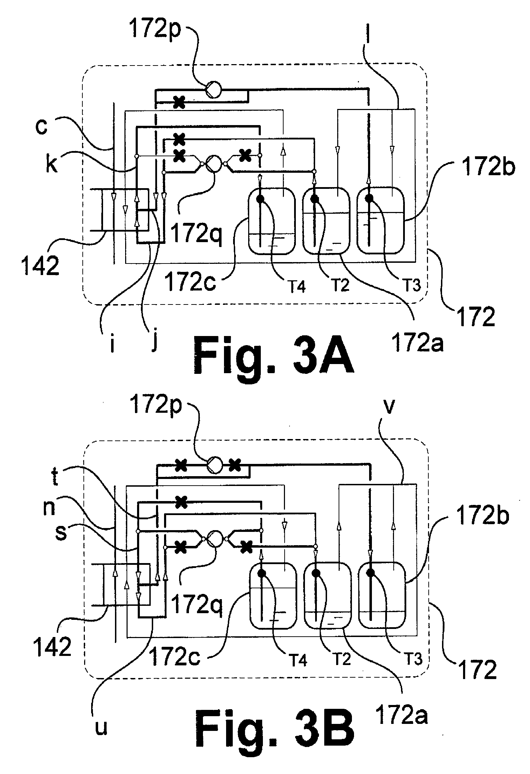

Figur 3A und 3B zeigen entsprechend das zweite Kältemittelteilsystem 172 des Kältemittelsystems 17. In dem zweiten Kältemittelteilsystem 172 sind drei Kältemitteltanks, ein erster (kalter) Kältemitteltank 172a, ein zweiter (temperierter) Kältemitteltank 172b und ein dritter (warmer) Kältemitteltank 172c vorgesehen. Diese sind zum Speichern eines zweiten Kältemittels mit unterschiedlichen Temperaturen (erster Kältemitteltank 172a: drittes Temperaturniveau T3, zweiter Kältemitteltank 172b: viertes Temperaturniveau T4, dritter Kältemitteltank 172c: fünftes Temperaturniveau T5) eingerichtet. Zum Führen des zweiten Kältemittels des zweiten Kältemittelteilsystems 172 durch den zweiten Wärmetauscherblock 142 des Wärmetauschersystems 14 sind im dargestellten Beispiel zwei Pumpen 172p und 172q vorgesehen.

Die Beschaltung der Pumpen 172p und 172q bzw. der mit diesen verbundenen Leitungen ergibt sich unmittelbar aus der Darstellung der Figur 3A und 3B. In der dargestellten Weise werden in dem ersten Betriebsmodus (Figur 3A) die Ströme bzw. Teilströme des zweiten Kältemittels i, j und k bzw. der Strom I des nichtkondensierenden Gases, das das zweite Kältemittel auch hier in den Kältemitteltanks 172a bis 172c überlagert, erzeugt. Entsprechend werden in dem zweiten Betriebsmodus (Figur 3B) die Ströme bzw. Teilströme des zweiten Kältemittels s, t, u bzw. der Strom des nichtkondensierenden Gases v erzeugt. Der Strom c und der zu verdampfende bzw. pseudozuverdampfende Strom n sind ebenfalls angegeben.

Insgesamt lässt sich durch die Verwendung des Kältemittelsystems 17 und des Wärmetauschersystems 14 eine energetisch günstige Abkühlung bzw. Erwärmung der Ströme c und n erzielen. Dabei weist das erste Kältemittel in dem ersten Kältemitteltank 171a des ersten Kältemittelteilsystems 171 eine niedrigere Temperatur auf als das erste Kältemittel in dem zweiten Kältemitteltank 171 b des ersten Kältemittelteilsystems 171 auf. In dem zweiten Kältemittelteilsystem 172 ist die Temperatur des zweiten Kältemittels in dem ersten Kältemitteltank 171a am geringsten, höher in dem zweiten Kältemitteltank 171 b und nochmals höher in dem dritten Kältemitteltank 171 c.

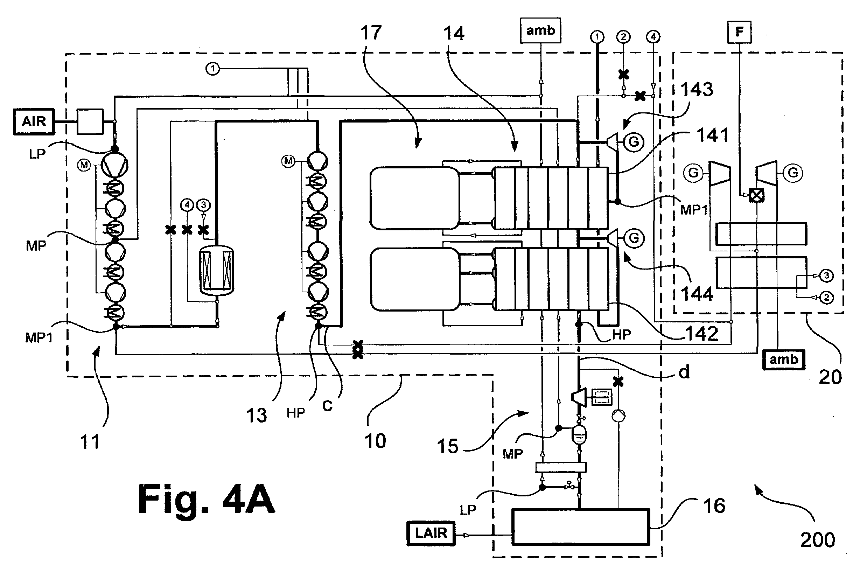

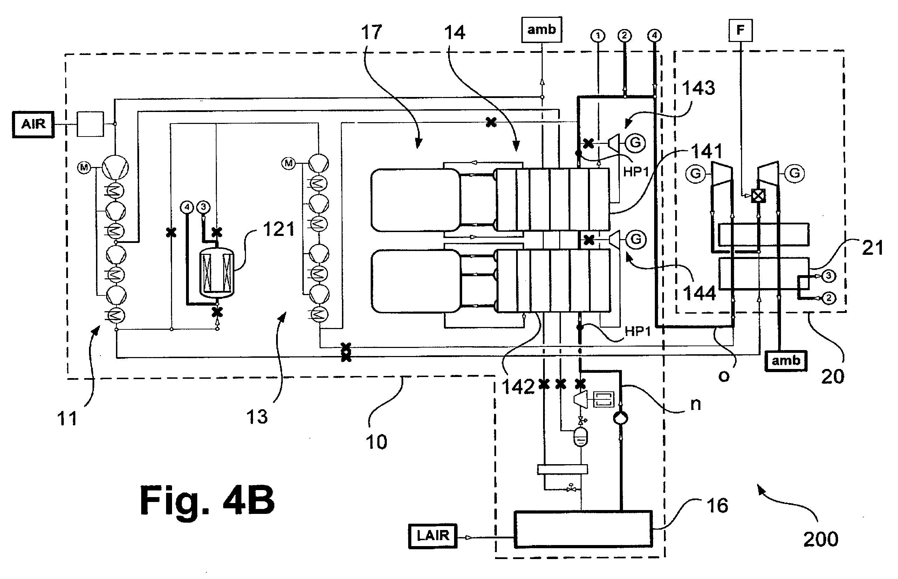

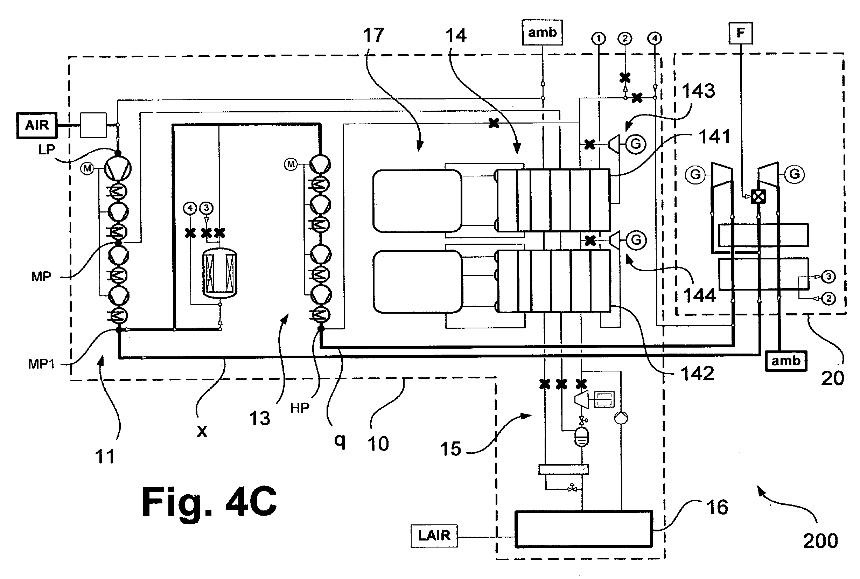

In den Figuren 4A bis 4C ist eine Energieerzeugungsanlage gemäß einer weiteren Ausführungsform der Erfindung schematisch dargestellt und insgesamt mit 200 bezeichnet. Auch hier entspricht Figur 4A dem ersten Betriebsmodus, Figur 4B dem zweiten Betriebsmodus und Figur 4C dem dritten Betriebsmodus. Der Betrieb der Energieerzeugungsanlage 200 entspricht teilweise jenem der Energieerzeugungsanlage 100, die in den Figuren 1A bis 1C dargestellt ist. Das Kältemittelsystem 17 kann identisch wie dort ausgebildet sein und beispielsweise die Kältemittelteilsysteme 171 und 172 aufweisen, die in den zuvor erläuterten Figuren 2A, bis 3B gezeigt sind.

Die Energieerzeugungsanlage 200 unterscheidet sich im Wesentlichen dadurch von der Energieerzeugungsanlage 100, dass das Wärmetauschersystem 14 zusätzlich über Entspannungseinrichtungen 143 und 144 verfügt. Zu diesen können jeweils von dem Strom c, der hier in einer größeren Menge bereitgestellt wird, Teilströme abgezweigt werden (ohne Bezeichnung). Diese Teilströme können in den Entspannungseinrichtungen 143 und 144, die beispielsweise Entspannungsturbinen aufweisen können, welche jeweils mit einem Generator G gekoppelt sind, entspannt werden. Statt eines Generators G kann jeweils auch eine Ölbremse oder eine andere Bremseinrichtung in den Entspannungseinrichtungen 143 und 144 vorgesehen sein.

Die Teilströme werden beispielsweise vom vierten Druckniveau HP auf das dritte Druckniveau MP1 entspannt. Sie können dem ersten Wärmetauscherblock 141 bzw. dem zweiten Wärmetauscherblock 142 am kalten Ende bzw. bei einer Zwischentemperatur zugeführt und entsprechend erwärmt werden. Die erwärmten Ströme können vereinigt und stromauf erneut in die Luftbehandlungseinheit eingespeist werden. Die Einspeisung kann beispielsweise in Form einer Zuspeisung stromauf des Hauptverdichtersystems 11, an einer Zwischenstelle des Hauptverdichtersystems 11, oder stromauf des Nachverdichtersystems 13 erfolgen (vgl. Verknüpfung 1). Durch die zusätzlichen Entspannungseinrichtungen 143 und 144 kann zusätzliche Kälte generiert werden, wodurch eine größere Menge an Einsatzluft AIR mittels des Verflüssigungssystems 15 verflüssigt werden kann. Die Energieerzeugungsanlage 200 ist daher eher als die Energieerzeugungsanlage 100 in der Lage, den Bedarf an Luftverflüssigungsprodukt LAIR, der in dem zweiten Betriebsmodus besteht, zu decken. Gleichwohl kann der Energieerzeugungsanlage 200 ein Luftverflüssigungsprodukt auch extern zugeführt werden.

Der zweite Betriebsmodus der Energieerzeugungsanlage 200, der in Figur 4B gezeigt ist und der dritte Betriebsmodus der Energieerzeugungsanlage 200, der in Figur 4C gezeigt ist, entsprechen im Wesentlichen den jeweiligen Betriebsmodi der Energieerzeugungsanlage 100 (vgl. Figur 1B und 1C). Auf eine wiederholte Erläuterung wird daher verzichtet. Wie erwähnt, kann insbesondere im zweiten Betriebsmodus, der in Figur 4B dargestellt ist, auf eine externe Zuführung von Luftverflüssigungsprodukt LAIR verzichtet werden. Die Entspannungseinrichtungen 143 und 144 sind in dem zweiten und dem dritten Betriebsmodus nicht aktiv.

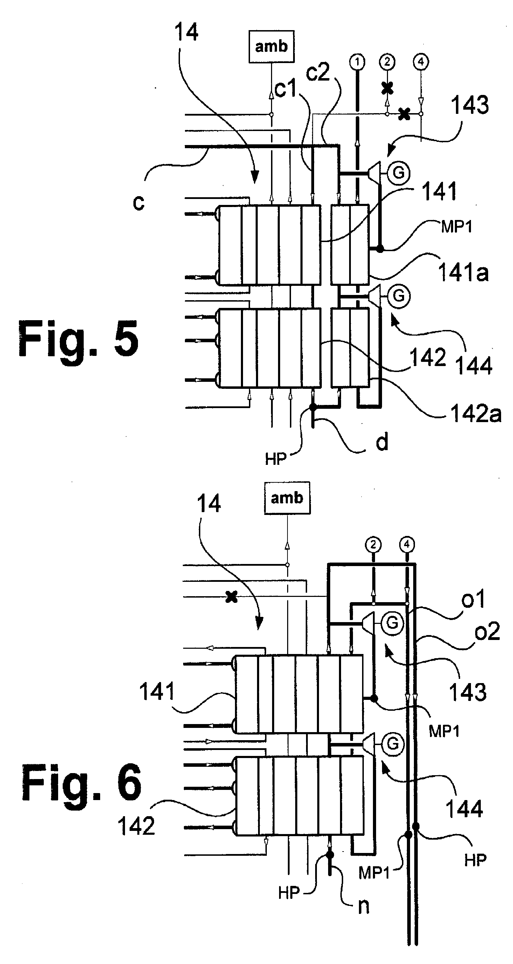

Figur 5 zeigt eine weitere alternative Ausführungsform eines Wärmetauschersystems 14. Dieses kann alternativ zu dem in den Figuren 1A bis 1C bzw. 4A bis 4C gezeigten Wärmetauschersystemen 14 eingesetzt werden. In Figur 5 ist dabei der erste Betriebsmodus dargestellt. Ein entsprechendes Wärmetauschersystem 14 verfügt auch hier über entsprechende erste und zweite Wärmetauscherblöcke 141 und 142, die an ein Kältemittelsystem 17 (nicht gezeigt) angebunden sind. Parallel zu dem ersten Wärmetauscherblock 141 und dem zweiten Wärmetauscherblock 142 sind weitere Wärmetauscherblöcke 141 a und 142a vorgesehen. Der Strom c kann dabei in die Teilströme c1 und c2 aufgeteilt und, wie dargestellt, in den ersten Wärmetauscherblock 141 bzw. den weiteren Wärmetauscherblock 141 a eingespeist werden. Jeweils ein Teilstrom des zweiten Teilstroms c2 kann in einer Entspannungseinrichtung 143 bzw. 144, beispielsweise ebenfalls einer Entspannungsturbine, die mit einem Generator G gekoppelt ist, entspannt werden. Die in der Figur 5 dargestellte Ausführungsform des Wärmetauschersystems 14 unterscheidet sich damit im Wesentlichen dadurch von der zuvor erläuterten Ausführungsform, die in den Figuren 4A bis 4C gezeigt ist, dass die Wärmetauscherblöcke 141a und 142a von den Wärmetauscherblöcken 141 und 142 getrennt sind.

In Figur 6 ist eine weitere Ausführungsform eines Wärmetauschersystems 14 dargestellt, das ebenfalls alternativ zu den zuvor erläuterten Möglichkeiten in einer entsprechenden Energieerzeugungsanlage 100 oder 200 zum Einsatz kommen kann. Die Figur 6 zeigt jedoch den zweiten Betriebsmodus. Auch hier sind Entspannungseinrichtungen 143 und 144 vorgesehen, die jedoch während dieses zweiten Betriebsmodus betrieben werden. Auch diese können über Entspannungsturbinen verfügen, welche mit entsprechenden Generatoren G gekoppelt sein können. Teilströme des Stroms n können dabei vor und nach Erwärmung in dem ersten Wärmetauscherblock 141 und dem zweiten Wärmetauscherblock 142 in den Entspannungseinrichtungen 143 und 144 entspannt werden. Hieraus wird ein Strom o1 gebildet. Ein Reststrom o2 wird nur erwärmt. Die Ströme o1 und o2 können der Kraftwerkseinheit 20 zugeleitet werden, wobei der Strom o1 auf dem dritten Druckniveau MP1 und der Strom o2 auf dem vierten Druckniveau HP liegen kann. Diese Ströme können den Eingängen 20a (Strom o2) und 20b (Strom o1) der Kraftwerkseinheit 20 zugeführt werden.

## Patentansprüche

1. Verfahren zur Erzeugung von elektrischer Energie in einer kombinierten Energieerzeugungsanlage (100, 200), die eine Luftbehandlungseinheit (10) und eine Kraftwerkseinheit (20) umfasst, wobei
• in einem ersten Betriebsmodus in der Luftbehandlungseinheit (10) Luft (AIR) nacheinander verdichtet, abgekühlt und entspannt und zur Gewinnung eines Luftverflüssigungsprodukts (LAIR) verwendet wird,
• in einem zweiten Betriebsmodus in der Luftbehandlungseinheit (10) ein Luftverflüssigungsprodukt (LAIR) bei überatmoshärischem Druck verdampft oder pseudoverdampft und in der Kraftwerkseinheit (20) zur Gewinnung von elektrischer Energie verwendet wird, und
• in einem dritten Betriebsmodus in der Luftbehandlungseinheit (10) Luft (AIR) verdichtet und in der Kraftwerkseinheit (20) zur Gewinnung von elektrischer Energie verwendet wird,
**dadurch gekennzeichnet,**
• **dass** die Luft (AIR) in dem ersten Betriebsmodus nacheinander im Gegenstrom gegen ein erstes und gegen ein zweites flüssiges Kältemittel in einem Wärmetauschersystem (14) abgekühlt wird, dem das erste Kältemittel auf einem ersten Temperaturniveau (T1) zugeführt und nach Erwärmung auf einem zweiten Temperaturniveau (T2) entnommen wird, und dem das zweite Kältemittel zum Teil auf einem dritten Temperaturniveau (T3) und zum Teil auf einem vierten Temperaturniveau (T4) zugeführt und nach Erwärmung auf einem fünften Temperaturniveau (T5) entnommen wird,
• **dass** das Luftverflüssigungsprodukt (LAIR) in dem zweiten Betriebsmodus nacheinander im Gegenstrom gegen das zweite und gegen das erste Kältemittel in dem Wärmetauschersystem (14) erwärmt wird, dem das zweite Kältemittel auf dem fünften Temperaturniveau (T5) zugeführt und nach Abkühlung zum Teil auf dem vierten Temperaturniveau (T4) und zum Teil auf dem dritten Temperaturniveau (T3) entnommen wird, und dem das erste Kältemittel auf dem zweiten Temperaturniveau (T2) zugeführt und nach Abkühlung auf dem ersten Temperaturniveau (T1) entnommen wird,
• **dass** die Luft (AIR) in dem ersten Betriebsmodus nacheinander von einem ersten Druckniveau (LP) auf ein zweites Druckniveau (MP), auf ein drittes Druckniveau (MP1) und auf ein viertes Druckniveau (HP) verdichtet wird,
• **dass** das Luftverflüssigungsprodukt (LAIR) in dem zweiten Betriebsmodus auf einem fünften Druckniveau (HP1) erwärmt wird, das unterhalb des vierten Druckniveaus (HP) liegt, und
• **dass** die Luft (AIR) in dem dritten Betriebsmodus zu einem ersten Anteil auf das dritte Druckniveau (MP1) und zu einem zweiten Anteil auf das vierte Druckniveau (HP) oder das fünfte Druckniveau (HP1) verdichtet wird, wobei der erste Anteil und der zweite Anteil getrennt voneinander in die Kraftwerkseinheit (20) eingeleitet werden.

2. Verfahren nach Anspruch 1, bei dem als das erste und/oder als das zweite Kältemittel Propan und/oder ein niederwertiger Alkohol verwendet wird.

3. Verfahren nach Anspruch 1 oder 2, bei dem zur Bereitstellung des ersten Kältemittels zwei Kältemitteltanks (171a, 171b) und zur Bereitstellung des zweiten Kältemittels drei Kältemitteltanks (172a, 172b, 172c) verwendet werden.

4. Verfahren nach einem der vorstehenden Ansprüche, bei dem das zweite Kältemittel in dem ersten Betriebsmodus dem Wärmetauschersystem (14) in Form von Teilströmen (i, j) auf dem dritten Temperaturniveau (T3) und auf dem vierten Temperaturniveau (T4) zugeführt und in Form eines Sammelstroms (k) auf dem fünften Temperaturniveau (T5) entnommen wird.

5. Verfahren nach einem der vorstehenden Ansprüche, bei dem das zweite Kältemittel in dem zweiten Betriebsmodus dem Wärmetauschersystem (14) in Form eines Sammelstroms (s) auf dem fünftenTemperaturniveau (T5) zugeführt und in Form von Teilströmen auf dem vierten Temperaturniveau (T4) und auf dem dritten Temperaturniveau (T3) entnommen wird.

6. Verfahren nach einem der vorstehenden Ansprüche, bei dem jeweils ein Strom eines nichtkondensierenden Gases im Gegenstrom zu dem ersten und dem zweiten Kältemittel durch das Wärmetauschersystem geführt wird.

7. Verfahren nach einem der vorstehenden Ansprüche, bei dem
• das erste Temperaturniveau (T1) bei 20 bis 50 °C,
• das zweite Temperaturniveau (T2) bei -100 bis -70 °C,
• das dritte Temperaturniveau (T3) bei -100 bis -70 °C,
• das vierte Temperaturniveau (T4) bei -140 bis -100 °C, und
• das fünfte Temperaturniveau (T5) bei -180 bis -150 °C liegt.

8. Verfahren nach einem der vorstehenden Ansprüche, bei dem
• das erste Druckniveau (LP) bei 0 bis 2 bar, insbesondere 1,4 bar,
• das zweite Druckniveau (MP) bei 4 bis 8 bar, insbesondere 5,6 bar,
• das dritte Druckniveau (MP1) bei 12 bis 50 bar, insbesondere 17 bar,
• das vierte Druckniveau (HP) bei 50 bis 100 bar, insbesondere 85 bar, und
• das fünfte Druckniveau (HP1) bei 50 bis 100 bar, insbesondere 65 bar, liegt.

9. Verfahren nach einem der vorstehenden Ansprüche, bei dem das in dem zweiten Betriebsmodus in der Luftbehandlungseinheit (10) unter Druck erwärmte und verdampfte oder pseudoverdampfte Luftverflüssigungsprodukt (LAIR) in der Kraftwerkseinheit (20) durch eine Brennkammer (25) geführt wird, in der ein Brennstoff (F) verbrannt wird, wobei ein Abgas aus der Brennkammer (25) auf dem dritten Druckniveau (MP1) einer mit einem Generator (G) gekoppelten Entspannungsturbine (24) zugeführt wird.

10. Verfahren nach Anspruch 9, bei dem das in dem zweiten Betriebsmodus in der Luftbehandlungseinheit (10) unter Druck erwärmte und verdampfte oder pseudoverdampfte Luftverflüssigungsprodukt (LAIR) in der Kraftwerkseinheit (20) vor dem Führen durch die Brennkammer (25) mit einem Druck auf dem fünften Druckniveau (HP1) einer weiteren mit einem Generator (G) gekoppelten Entspannungsturbine (23) zugeführt wird.

11. Verfahren nach Anspruch 9 oder 10, bei dem das Abgas der Brennkammer (25) nach dem Entspannen in der mit dem Generator (G) gekoppelten Entspannungsturbine (24) einem Abwärmedampferzeuger zugeführt wird.

12. Verfahren nach einem der vorstehenden Ansprüche, bei dem einer der in dem dritten Betriebsmodus getrennt voneinander in die Kraftwerkseinheit (20) eingeleiteten Anteile der Luft (AIR) durch Erhitzen druckerhöht wird.

13. Verfahren nach einem der vorstehenden Ansprüche, bei dem das in dem zweiten Betriebsmodus in der Luftbehandlungseinheit (10) unter Druck erwärmte und verdampfte oder pseudoverdampfte Luftverflüssigungsprodukt (LAIR) in der Kraftwerkseinheit (20) durch Erhitzen druckerhöht wird.

14. Verfahren nach Anspruch 12 oder 13, bei dem zum Erhitzen Abwärme und/oder Solarwärme verwendet wird.

15. Energieerzeugungsanlage (100, 200) zur Erzeugung von elektrischer Energie mit einer mit einer Kraftwerkseinheit (20) kombinierten Luftbehandlungseinheit (10), die eine Verdichteranordnung (11, 13), ein Wärmetauschersystem (14) mit einem Kältemittelsystem (17), ein Verflüssigungssystem (15) und ein Tanksystem (16) umfasst und dafür eingerichtet ist,
• in einem ersten Betriebsmodus Luft (AIR) in der Verdichteranordnung (11, 13) zu verdichten, in dem Wärmetauschersystem (14) abzukühlen und in dem Verflüssigungssystem (15) zu entspannen und zur Gewinnung eines Luftverflüssigungsprodukts (LAIR) zu verwenden,
• in einem zweiten Betriebsmodus ein Luftverflüssigungsprodukt (LAIR) in dem Wärmetauschersystem (14) bei überatmoshärischem Druck zu verdampfen oder pseudozuverdampfen und in der Kraftwerkseinheit (20) zur Gewinnung von elektrischer Energie zu verwenden, und
• in einem dritten Betriebsmodus Luft (AIR) in der Verdichteranordnung (11, 13) zu verdichten und in der Kraftwerkseinheit (20) zur Gewinnung von elektrischer Energie zu verwenden,
**dadurch gekennzeichnet,**
**dass** die Energieerzeugungsanlage (100, 200) dafür eingerichtet ist,
• die Luft (AIR) in dem ersten Betriebsmodus nacheinander im Gegenstrom gegen ein erstes und gegen ein zweites flüssiges Kältemittel in dem Wärmetauschersystem (14) abzukühlen, indem diesem das erste Kältemittel auf einem ersten Temperaturniveau (T1) zugeführt und nach Erwärmung auf einem zweiten Temperaturniveau (T2) entnommen wird, und das zweite Kältemittel zum Teil auf einem dritten Temperatumiveau (T3) und zum Teil auf einem vierten Temperatumiveau (T4) zugeführt und nach Erwärmung auf einem fünften Temperaturniveau (T5) entnommen wird,
• das Luftverflüssigungsprodukt (LAIR) in dem zweiten Betriebsmodus nacheinander im Gegenstrom gegen das zweite und gegen das erste Kältemittel in dem Wärmetauschersystem (14) zu erwärmen, indem diesem das zweite Kältemittel auf dem fünften Temperatumiveau (T5) zugeführt und nach Abkühlung zum Teil auf dem vierten Temperaturniveau (T4) und zum Teil auf dem dritten Temperaturniveau (T3) entnommen wird, und das erste Kältemittel auf dem zweiten Temperaturniveau (T2) zugeführt und nach Abkühlung auf dem ersten Temperaturniveau (T1) entnommen wird,
• die Luft (AIR) in dem ersten Betriebsmodus in der Verdichteranordnung (11, 13) nacheinander von einem ersten Druckniveau (LP) auf ein zweites Druckniveau (MP), auf ein drittes Druckniveau (MP1) und auf ein viertes Druckniveau (HP) zu verdichten,
• das Luftverflüssigungsprodukt (LAIR) in dem zweiten Betriebsmodus in dem Wärmetauschersystem auf einem fünften Druckniveau (HP1) zu erwärmen, das unterhalb des vierten Druckniveaus (HP) liegt, und
• die Luft (AIR) in dem dritten Betriebsmodus in der Verdichteranordnung (11, 13) zu einem ersten Anteil auf das dritte Druckniveau (MP1) und zu einem zweiten Anteil auf das vierte (HP) oder das fünfte Druckniveau (HP1) zu verdichten und den ersten Anteil und den zweiten Anteil getrennt voneinander in die Kraftwerkseinheit (20) einzuleiten.

16. Energieerzeugungsanlage (100, 200) nach Anspruch 15, die dafür eingerichtet ist, ein Verfahren nach einem der Ansprüche 1 bis 14 durchzuführen.

## Claims

1. Method for generating electrical energy in a combined energy generation plant (100, 200) which comprises an air treatment unit (10) and a power plant unit (20), wherein
• in a first operating mode, in the air treatment unit (10), air (AIR) is successively compressed, cooled and expanded and used for obtaining an air liquefaction product (LAIR),
• in a second operating mode, in the air treatment unit (10), an air liquefaction product (LAIR) is vaporized or pseudo vaporized at superatmospheric pressure and used for obtaining electrical energy in the power plant unit (20), and
• in a third operating mode, in the air treatment unit (10), air (AIR) is compressed and used in the power plant unit (20) for obtaining electrical energy,
**characterized in that**
• the air (AIR) in the first operating mode is successively cooled in counterflow against a first liquid coolant and against a second liquid coolant in a heat-exchange system (14) to which the first coolant is fed at a first temperature level (T1) and is taken off after heating to a second temperature level (T2), and to which the second coolant is fed in part at a third temperature level (T3) and in part at a fourth temperature level (T4) and is taken off after heating to a fifth temperature level (T5),
• **in that** the air liquefaction product (LAIR) in the second operating mode is successively warmed in counterflow against the second coolant and against the first coolant in the heat-exchange system (14) to which the second coolant is fed at the fifth temperature level (T5) and is taken off, after cooling, in part at the fourth temperature level (T4) and in part at the third temperature level (T3), and to which the first coolant is fed at the second temperature level (T2) and is taken off after cooling at the first temperature level (T1),
• **in that** the air (AIR) in the first operating mode is successively compressed from a first pressure level (LP) to a second pressure level (MP), to a third pressure level (MP1) and to a fourth pressure level (HP),
• **in that** the air liquefaction product (LAIR) is warmed in the second operating mode to a fifth pressure level (HP1) that is beneath the fourth pressure level (HP), and
• **in that** the air (AIR) is compressed in the third operating mode at a first fraction to the third pressure level (MP1) and at a second fraction to the fourth pressure level (HP), or the fifth pressure level (HP1), wherein the first fraction and the second fraction are introduced separately from one another into the power plant unit (20).

2. Method according to Claim 1, in which propane and/or a low-grade alcohol is used as the first and/or the second coolant.

3. Method according to Claim 1 or 2, in which two coolant tanks (171a, 171b) are used for providing the first coolant and three coolant tanks (172a, 172b, 172c) are used for providing the second coolant.

4. Method according to any one of the preceding claims, in which the second coolant is fed in the first operating mode to the heat-exchange system (14) in the form of substreams (i, j) at the third temperature level (T3) and at the fourth temperature level (T4), and is taken off in the form of a collected stream (k) at the fifth temperature level (T5).

5. Method according to any one of the preceding claims, in which the second coolant, in the second operating mode, is fed to the heat-exchange system (14) in the form of a collected stream (s) at the fifth temperature level (T5), and taken off at the third temperature level (T3) in the form of substreams at the fourth temperature level (T4).

6. Method according to any one of the preceding claims, in which in each case a stream of a non-condensing gas is conducted through the heat-exchange system in counterflow to the first coolant and to the second coolant.

7. Method according to any one of the preceding claims, in which
• the first temperature level (T1) is at 20 to 50°C,
• the second temperature level (T2) is at -100 to -70°C,
• the third temperature level (T3) is at -100 to -70°C,
• the fourth temperature level (T4) is at -140 to -100°C,
• the fifth temperature level (T5) is at -180 to -150°C.

8. Method according to any one of the preceding claims, in which
• the first pressure level (LP) is at 0 to 2 bar, in particular 1.4 bar,
• the second pressure level (MP) is at 4 to 8 bar, in particular 5.6 bar,
• the third pressure level (MP1) is at 12 to 50 bar, in particular 17 bar,
• the fourth pressure level (HP) is at 50 to 100 bar, in particular 85 bar, and
• the fifth pressure level (HP1) is at 50 to 100 bar, in particular 65 bar.

9. Method according to any one of the preceding claims, in which the air liquefaction product (LAIR) that was warmed under pressure and vaporized or pseudo vaporized in the second operating mode in the air treatment unit (10) is conducted in the power plant unit (20) through a combustion chamber (25) in which a fuel (F) is burnt, wherein an exhaust gas from the combustion chamber (25) is fed at the third pressure level (MP1) to an expansion turbine (24) that is coupled to a generator (G).

10. Method according to Claim 9, in which the air liquefaction product (LAIR) that was warmed under pressure and vaporized or pseudo vaporized in the second operating mode in the air treatment unit (10) is conducted in the power plant unit (20), before it is conducted through the combustion chamber (25) is fed having a pressure at the fifth pressure level (HP1) to a further expansion turbine (23) that is coupled to a generator (G).

11. Method according to Claim 9 or 10, in which the exhaust gas of the combustion chamber (25), after it is expanded in the expansion turbine (24) that is coupled to the generator (G), is fed to a waste-heat steam generator.

12. Method according to any one of the preceding claims, in which one of the fractions of the air (AIR) that were introduced into the power plant unit (20) separately from one another in the third operating mode is boosted in pressure by heating.

13. Method according to any one of the preceding claims, in which the air liquefaction product (LAIR) that was warmed under pressure and vaporized or pseudo vaporized in the second operating mode in the air treatment unit (10) is boosted in pressure by heating in the power plant unit (20).

14. Method according to Claim 12 or 13, in which waste heat and/or solar heat is used for the heating.

15. Energy generation plant (100, 200) for generating electrical energy having an air treatment unit (10) combined with a power plant unit (20), which air treatment unit comprises a compressor arrangement (11, 13), a heat-exchange system (14) having a coolant system (17), a liquefaction system (15) and a tank system (16) and is equipped,
• in a first operating mode to compress air (AIR) in the compressor arrangement (11, 13), to cool it in the heat-exchange system (14) and to expand it in the liquefaction system (15) and to use it for obtaining an air liquefaction product (LAIR),
• in a second operating mode to vaporize or pseudo vaporize an air liquefaction product (LAIR) in the heat-exchange system (14) at superatmospheric pressure and to use it in the power plant unit (20) to obtain electrical energy, and
• in a third operating mode to compress air (AIR) in the compressor arrangement (11, 13) and to use it in the power plant unit (20) to obtain electrical energy,
**characterized in that**
the energy generation plant (100, 200) is equipped,
• to cool the air (AIR) in the first operating mode successively in counterflow against a first liquid coolant and against a second liquid coolant in the heat-exchange system (14), by feeding thereto the first coolant at a first temperature level (T1) and is taken off after it is heated to a second temperature level (T2), and the second coolant is fed in part at a third temperature level (T3) and in part at a fourth temperature level (T4) and is taken off after it is heated to a fifth temperature level (T5),
• to warm the air liquefaction product (LAIR) in the second operating mode successively in counterflow against the second coolant and against the first coolant in the heat-exchange system (14), by feeding thereto the second coolant at the fifth temperature level (T5) and, after it is cooled in part at the fourth temperature level (T4) and in part at the third temperature level (T3) is taken off, and the first coolant is fed at the second temperature level (T2) and is taken off after it is cooled to the first temperature level (T1),
• to compress the air (AIR) in the first operating mode in the compressor arrangement (11, 13) successively from a first pressure level (LP) to a second pressure level (MP) to a third pressure level (MP1) and to a fourth pressure level (HP),
• to warm the air liquefaction product (LAIR) in the second operating mode in the heat-exchange system at a fifth pressure level (HP1) that is below the fourth pressure level (HP), and
• to compress the air (AIR) in the third operating mode in the compressor arrangement (11, 13) at a first fraction to the third pressure level (MP1) and at a second fraction to the fourth (HP) or the fifth pressure level (HP1) and to introduce the first fraction and the second fraction separately from one another into the power plant unit (20).

16. Energy generation plant (100, 200) according to Claim 15, that is equipped to carry out a method according to any one of Claims 1 to 14.

## Revendications

1. Procédé de production d'énergie électrique dans une installation de production d'énergie combinée (100,200), qui comprend une unité de traitement d'air (10) et une unité de centrale électrique (20), dans lequel:
• dans un premier mode de fonctionnement dans l'unité de traitement d'air (10), de l'air (AIR) est successivement compressé, refroidi et détendu et est utilisé pour obtenir un produit de liquéfaction d'air (LAIR),
• dans un deuxième mode de fonctionnement dans l'unité de traitement d'air (10), un produit de liquéfaction d'air (LAIR) est évaporé ou pseudo évaporé à une pression sur-atmosphérique et utilisé dans l'unité de centrale électrique (20) pour obtenir de l'énergie électrique et
• dans un troisième mode de fonctionnement dans l'unité de traitement d'air (10), de l'air (AIR) est compressé et utilisé dans l'unité de centrale électrique (20) pour obtenir de l'énergie électrique, **caractérisé en ce que**
• l'air (AIR) dans le premier mode de fonctionnement est successivement refroidi à contre-courant contre un premier et contre un second réfrigérant liquide dans un système d'échangeur thermique (14), dans lequel le premier réfrigérant est introduit à un premier niveau de température (T1) et est prélevé après le réchauffement à un deuxième niveau de température (T2) et dans lequel système le deuxième réfrigérant est introduit partiellement à un troisième niveau de température (T3) et partiellement à un quatrième niveau de température (T4) et après le réchauffement est prélevé à un cinquième niveau de température (T5),
• le produit de liquéfaction d'air (LAIR) dans le deuxième mode de fonctionnement est successivement réchauffé à contre-courant contre le deuxième et contre le premier réfrigérant dans le système d'échangeur thermique (14), système dans lequel le deuxième réfrigérant est introduit au cinquième niveau de température (T5) et après le refroidissement est prélevé partiellement au quatrième niveau de température (T4) et partiellement au troisième niveau de température (T3), et dans lequel système le premier réfrigérant est introduit au deuxième niveau de température (T2) et est prélevé après le refroidissement au premier niveau de température (T1),
• l'air (AIR) dans le premier mode de fonctionnement est successivement compressé d'un premier niveau de pression (LM) à un deuxième niveau de pression (MP), à un troisième niveau de pression (MP1) et à un quatrième niveau de pression (HP),
• le produit de liquéfaction d'air (LAIR) dans le deuxième mode de fonctionnement est réchauffé à un cinquième niveau de pression (HP1), qui est situé au-dessous du quatrième niveau de pression (HP) et
• l'air (AIR) dans le troisième mode de fonctionnement est compressé pour une première fraction au troisième niveau de pression (MP1) et pour une deuxième fraction au quatrième niveau de pression (HP) ou au cinquième niveau de pression (HP1), la première fraction et la deuxième fraction sont alimentées séparément l'une de l'autre dans l'unité de centrale électrique (20).

2. Procédé selon la revendication 1, dans lequel comme premier et/ou comme deuxième réfrigérant du propane et/ou un alcool ordinaire est utilisé.

3. Procédé selon la revendication 1 ou 2, dans lequel deux réservoirs de réfrigérant (171a,171b) sont utilisées pour fournir le premier réfrigérant et trois réservoirs de réfrigérant (172a,172b,172c) sont utilisés pour fournir le deuxième réfrigérant.

4. Procédé selon l'une des revendications précédentes, dans lequel le deuxième réfrigérant dans le premier mode de fonctionnement est alimenté dans le système d'échangeur thermique (14) sous forme de courants partiels (i,j) au troisième niveau de température (T3) et au quatrième niveau de température (T4) et est prélevé sous forme d'un courant collectif (k) au cinquième niveau de température (T5).

5. Procédé selon l'une des revendications précédentes, dans lequel le deuxième réfrigérant dans le deuxième mode de fonctionnement est introduit dans le système d'échangeur thermique (14) sous forme d'un courant collectif (s) au cinquième niveau de température (T5) et est prélevé sous forme de courants partiels au quatrième niveau de température (T4) et au troisième niveau de température (T3).

6. Procédé selon l'une des revendications précédentes, dans lequel respectivement un flux d'un gaz non condensateur est guidé à contre-courant dans le premier et le deuxième réfrigérant à travers le système d'échangeur thermique.

7. Procédé selon l'une des revendications précédentes, dans lequel
• le premier niveau de température (T1) est compris entre 20 et 50 °C,
• le deuxième niveau de température (T2) est compris entre -100 et -70 °C,
• le troisième niveau de température (T3) est compris entre -100 et -70 °C,
• le quatrième niveau de température (T4) est compris entre -140 et - 100 °C, et
• le cinquième niveau de température (T5) est compris entre -180 et - 150 °C.

8. Procédé selon l'une des revendications précédentes, dans lequel
• le premier niveau de pression (LP) est compris entre 0 et 2 bar, a notamment une valeur de 1,4 bar,
• le deuxième niveau de pression (MP) est compris entre 4 et 8 bar, a notamment une valeur de 5,6 bar,
• le troisième niveau de pression (MP1) est compris entre 12 et 50 bar, a notamment une valeur de 17 bar,
• le quatrième niveau de pression (HP) est compris entre 50 et 100 bar, a notamment une valeur de 85 bar, et
• le cinquième niveau de pression (HP1) est compris entre 50 et 100 bar, a notamment une valeur de 65 bar.

9. Procédé selon l'une des revendications précédentes, dans lequel le produit de liquéfaction d'air (LAIR) chauffé sous pression et évaporé ou pseudo évaporé dans le deuxième mode de fonctionnement dans l'unité de traitement d'air (10) est guidé dans l'unité de centrale électrique (20) à travers une chambre de combustion (25), dans laquelle un combustible (F) est brûlé, un gaz d'échappement ressortant de la chambre de combustion (25) étant conduit au troisième niveau de pression (MP1) d'une turbine de détente (24) couplée avec un générateur (G).

10. Procédé selon la revendication 9, dans lequel le produit de liquéfaction d'air (LAIR) chauffé sous pression et évaporé ou pseudo évaporé dans le deuxième mode de fonctionnement dans l'unité de traitement d'air (10) est introduit dans l'unité de centrale électrique (20) avant le guidage à travers la chambre de combustion (25) avec une pression au cinquième niveau de pression (HP1) d'une autre turbine de détente (23) couplée avec un générateur (G).

11. Procédé selon la revendication 9 ou 10, dans lequel le gaz d'échappement de la chambre de combustion (25) est introduit après la détente dans la turbine de détente (24) couplée au un générateur (G) dans un générateur de vapeur de rejets thermiques.

12. Procédé selon l'une des revendications précédentes, dans lequel l'une des fractions de l'air (AIR) séparées les unes des autres dans le troisième mode de fonctionnement et introduites dans l'unité de centrale électrique (20) est augmentée en pression par réchauffement.

13. Procédé selon l'une des revendications précédentes, dans lequel le produit de liquéfaction d'air (LAIR) chauffé sous pression et évaporé ou pseudo évaporé dans le deuxième mode de fonctionnement dans l'unité de traitement d'air (10) est augmenté en pression par réchauffement dans l'unité de centrale électrique (20).

14. Procédé selon la revendication 12 ou 13, dans lequel les rejets thermiques et/ou la chaleur solaire sont utilisés pour le réchauffement.

15. Installation de production d'énergie (100,200) pour produire de l'énergie électrique avec une unité de traitement d'air (10) combinée avec une unité de centrale électrique (20), qui comprend un dispositif de compresseur (11,12), un système d'échangeur thermique (14) avec un système de réfrigérant (17), un système de liquéfaction (15) et un système de réservoir (16) et est conçue pour
• dans un premier mode de fonctionnement, compresser l'air (AIR) dans le dispositif de compresseur (11,13), le refroidir dans le système d'échangeur thermique (14) et le détendre dans le système de liquéfaction (15) et utiliser pour obtenir un produit de liquéfaction d'air (LAIR),
• dans un deuxième mode de fonctionnement, évaporer ou pseudo évaporer un produit de liquéfaction d'air (LAIR) dans le système d'échangeur thermique (14) à une pression sur-atmosphérique et l'utiliser dans l'unité de centrale électrique (20) pour obtenir de l'énergie électrique et
• dans un troisième mode de fonctionnement, compresser l'air (AIR) dans le dispositif de compresseur (11,13) et l'utiliser dans l'unité de centrale électrique (20) pour obtenir de l'énergie électrique,
**caractérisé en ce que** l'installation d'énergie électrique (100,200) est conçue pour
• refroidir l'air (AIR) dans le premier mode de fonctionnement successivement à contre-courant contre un premier et contre un second réfrigérant liquide dans un système d'échangeur thermique (14), en y introduisant le premier réfrigérant à un premier niveau de température (T1) et en le prélevant après le réchauffement à un deuxième niveau de température (T2), et en y introduisant le deuxième réfrigérant partiellement à un troisième niveau de température (T3) et partiellement à un quatrième niveau de température (T4) et après le réchauffement en le prélevant à un cinquième niveau de température (T5),
• réchauffer le produit de liquéfaction d'air (LAIR) dans le deuxième mode de fonctionnement successivement à contre-courant contre le deuxième et contre le premier réfrigérant dans le système d'échangeur thermique (14), en y introduisant le deuxième réfrigérant au cinquième niveau de température (T5) et en le prélevant après le refroidissement partiellement au quatrième niveau de température (T4) et partiellement au troisième niveau de température (T3), et en y introduisant le premier réfrigérant au deuxième niveau de température (T2) et en le prélevant après le refroidissement au premier niveau de température (T2),
• compresser l'air (AIR) dans le premier mode de fonctionnement dans le dispositif de compresseur (11, 13) successivement d'un premier niveau de pression (LM) à un deuxième niveau de pression (MP), à un troisième niveau de pression (MP1) et à un quatrième niveau de pression (HP),
• réchauffer le produit de liquéfaction d'air (LAIR) dans le deuxième mode de fonctionnement dans le système d'échangeur thermique à un cinquième niveau de pression (HP1), qui est situé au-dessous du quatrième niveau de pression (HP), et
• compresser l'air (AIR) dans le troisième mode de fonctionnement dans le dispositif de compresseur (11, 13) pour une première fraction au troisième niveau de pression (MP1) et pour une deuxième fraction au quatrième niveau de pression (HP) ou au cinquième niveau de pression (HP1) et alimenter la première fraction et la deuxième fraction séparément l'une de l'autre dans l'unité de centrale électrique (20).

16. Installation de production d'énergie (100,200) selon la revendication 15, qui est conçue pour mettre en oeuvre un procédé selon l'une des revendications 1 à 14.
